(19) **Europäisches Patentamt** / **European Patent Office** / **Office européen des brevets**

(11) **EP 4 213 354 B1**

(12) **EUROPEAN PATENT SPECIFICATION**

(45) Date of publication and mention of the grant of the patent:
**01.10.2025 Bulletin 2025/40**

(21) Application number: **22151658.6**

(22) Date of filing: **14.01.2022**

(51) International Patent Classification (IPC):
$H02M\ 1/00^{(2006.01)}$    $H02M\ 1/08^{(2006.01)}$
$H02M\ 1/15^{(2006.01)}$    $H02M\ 3/158^{(2006.01)}$
$H02M\ 1/32^{(2007.01)}$

(52) Cooperative Patent Classification (CPC):
**H02M 3/158; H02M 1/0009; H02M 1/08; H02M 1/15; H02M 1/32**

(54) **CURRENT LIMIT CONTROL CIRCUIT FOR A BOOST CONVERTER IN CCM**

STROMBEGRENZUNGSSCHALTUNG FÜR EINEN HOCHSETZSTELLER IN CCM

CIRCUIT DE COMMANDE DE LIMITATION DE COURANT D'UN CONVERTISSEUR ÉLÉVATEUR DANS UN MODE DE CONDUCTION CONTINU (CCM)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2023 Bulletin 2023/29**

(73) Proprietor: **Goodix Technology (HK) Company Limited**
**Sheung Shui (HK)**

(72) Inventor: **KRABBENBORG, Bernardus Henricus**
**6537 TL Nijmegen (NL)**

(74) Representative: **Nederlandsch Octrooibureau**
**P.O. Box 29720**
**2502 LS The Hague (NL)**

(56) References cited:
**WO-A1-2016/044487**    **US-A1- 2017 126 129**
**US-A1- 2021 359 605**    **US-B1- 10 476 387**

- GASPARRI OSVALDO ET AL: "DC-DC Buck Converter Driver with Variable Off-Time Peak Current Mode Control", ADVANCES IN SCIENCE, TECHNOLOGY AND ENGINEERING SYSTEMS JOURNAL, vol. 5, no. 6, 1 January 2020 (2020-01-01), pages 347 - 352, XP055932829, ISSN: 2415-6698, DOI: 10.25046/aj050642

- CHENG LIN ET AL: "On-Chip Compensated Wide Output Range Boost Converter with Fixed-Frequency Adaptive Off-Time Control for LED Driver Applications", IEEE TRANSACTIONS ON POWER ELECTRONICS, INSTITUTE OF ELECTRICAL AND ELECTRONICS ENGINEERS, USA, vol. 30, no. 4, 1 April 2015 (2015-04-01), pages 2096 - 2107, XP011563491, ISSN: 0885-8993, [retrieved on 20141103], DOI: 10.1109/TPEL.2014.2326257

- ON SEMICONDUCTORS: "100 mA, Fixed Frequency PWM Step-Up Micropower Switching Regulator", 1 March 2006 (2006-03-01), pages 1 - 17, XP093258695, Retrieved from the Internet <URL:https://belchip.by/sitedocs/00008359.pdf>

- VAN DEN BOSSCHE ET AL: "A simplified controller and detailed dynamics of constant off-time peak current control", JOURNAL OF ELECTRICAL ENGINEERING, vol. 68, no. 5, 1 September 2017 (2017-09-01), pages 390 - 395, XP093258739, ISSN: 1339-309X, Retrieved from the Internet <URL:https://intapi.sciendo.com/pdf/10.1515/jee-2017-0072> DOI: 10.1515/jee-2017-0072

- AYAZ HASAN ET AL: "Monolithic DC-DC boost converter with current-mode hysteretic control", ELECTRICAL AND COMPUTER ENGINEERING (CCECE), 2011 24TH CANADIAN CONFERENCE ON, IEEE, 8 May 2011 (2011-05-08), pages 1242 - 1245, XP031967721, ISBN: 978-1-4244-9788-1, DOI: 10.1109/CCECE.2011.6030661

**Description**

FIELD OF THE INVENTION

The invention relates to a control circuit to limit the input current for a boost converter circuit. The invention further relates to a boost converter circuit comprising said control circuit and to a method of operating said boost converter circuit comprising said control circuit.

BACKGROUND OF THE INVENTION

Energy harvesting is the process by which energy is derived from external sources, captured, and stored for small, wireless autonomous devices, like those used in wearable electronics and wireless sensor networks. A direct current to direct current 'DC-to-DC' converter circuits, such as boost converter circuits, are electronic circuits that convert a source of direct current (DC) from one voltage level to another voltage by first charging an energy storage element using an input voltage and then discharging the energy storage element to provide the energy at the output of the DC-to-DC converter. DC-to-DC converters can be used to increase the amount of energy harvested from an energy source. Constant-On-Time (COT) boost converters are popular for its simplicity and high performance.

When working in continuous conduction mode, a battery (and the PCB wiring to the battery) gives an impedance in series with a coil of the boost converter. This impedance usually has an inductive character so that the coil current ripple can cause a high voltage variation at the battery voltage connection of the coil on the PCB. Since also other applications may be connected at that point, it is usually decoupled to ground with a capacitor and thus creating a low pass filter between battery and coil. To avoid excessive currents in the coil, a current protection is usually implemented.

"Integrated overcurrent protection system for class-D audio power amplifiers", by M. Berkhout, IEEE Journal of Solid-State Circuits, Volume: 40, Issue 11, Nov. 2005, discloses a power stage that contains switches for switching inductive loads and provides current protection by measuring the current in the inductor and controlling the switches when the maximum current is detected. This overcurrent protection will nicely limit the maximum current. However, the period of time that the boost is charging, i.e., the duration of the phase where the current through the inductor is increased, now deviates from the intended value and the intended boost voltage can no longer be maintained as a natural result of the current limit action. The inductor current during this limiting action has unpredictable low frequency patterns with high amplitude. The voltage on the battery decoupling capacitor is also affected by this current limiting behavior. Filtering with a capacitor at the input of the boost converter is not very effective for these current patterns and lead to low frequency high amplitude voltage variations at the battery voltage that disturb the operation of the boost converter and other applications connected to this node. Furthermore, this solution prevents accurate battery current limiter control since there is no clear relation between battery current and peak coil current. The average current during the unpredictable switching behavior is lower than in case of regular switching. This limits the input power earlier than in case of regular switching.

US 10,476,387 BI discloses a switch frequency control apparatus comprising a timer coupled between a bias voltage and ground, wherein the timer comprises a first input configured to receive a ramp, a second input configured to receive a threshold voltage and an output configured to be connected to an input of a PWM circuit, wherein the output of the timer is used for setting either a constant on-time or a constant off-time of a power converter and a threshold generator coupled between the bias voltage and ground, wherein the threshold generator is configured to receive a plurality of control signals of the power converter and generate the threshold voltage based upon a duty cycle of the power converter.

US 2021/359605 AI discloses apparatus includes a first timer configured to determine a turn-off time of a first high-side switch of a buck-boost converter, and a second timer configured to determine a turn-off time of a second low-side switch of the buck-boost converter based on a comparison between a first signal and a second signal, the first signal being proportional to an input voltage of the buck-boost converter, and the second signal being generated based on a signal proportional to an output voltage of the buck-boost converter.

"DC-DC Buck Converter Driver with Variable Off-Time Peak Current 1\lode Control", by Gasparri, Osvaldo et al, Advances in Science, Technology and Engineering Systems Journal Volume 5, Number 5, 0 I January 2020, discloses that power converters in automotive industries are needed to source electronic devices. DC-DC Buck converter allows to drive loads ensuring their safety operation taking the car battery voltage as an input to generate a sub-voltage or current. By means of a control loop, the system makes sure that the output variable has the desired value in each operation condition. The Peak Current Mode Control (PCMC) is used to control the output current. Whenever the current reaches the reference maximum value (by load specs), the system acts to lower it. Intrinsically over-current protection is guaranteed. The paper presents an improvement of the basic PCMC, where, instead of just controlling the peak value, the loop controls also the average, more delicate feature, resulting in a more reliable driver system. The circuit is able to source 3A average-4.SV from a 13.5V nominal battery voltage, with a peak current of 3.3A and a 0.6A maximum ripple ($3\pm10\%$A). The concept has been designed and simulated on Simulink and then tested on hardware using dSpace, a Rapid Control Prototyping set-up.

Further prior art can be found in:

CHENG LIN ET AL: "On-Chip Compensated Wide Output Range Boost Converter with Fixed-Frequency Adaptive Off-Time Control for LED Driver Applications", IEEE TRANSACTIONS ON POWER ELECTRONICS, INSTITUTE OF ELECTRICAL AND ELECTRONICS ENGINEERS, USA, vol. 30, no. 4, 1 April 2015 (2015-04-01), pages 2096-2107, XP011563491, ISSN: 0885-8993, DOI: 10.1109/TPEL.2014.2326257

On Semiconductors: "100 mA, Fixed Frequency PWM Step-Up Micropower Switching Regulator", , 1 March 2006 (2006-03-01), pages 1-17, XP093258695

Van Den Bossche ET AL: "A simplified controller and detailed dynamics of constant off-time peak current control", Journal of Electrical Engineering, vol. 68, no. 5, 1 September 2017 (2017-09-01), pages 390-395, XP093258739, ISSN: 1339-309X, DOI: 10.1515/jee-2017-0072

AYAZ HASAN ET AL: "Monolithic DC-DC boost converter with current-mode hysteretic control", ELECTRICAL AND COMPUTER ENGINEERING (CCECE), 2011 24TH CANADIAN CONFERENCE ON, IEEE, 8 May 2011 (2011-05-08), pages 1242-1245, XP031967721, DOI: 10.1109/CCECE.2011.6030661 ISBN: 978-1-4244-9788-1

## SUMMARY OF THE INVENTION

An object of the invention is to implement control means to limit current for a boost converter such that the switching frequency is stable and the low frequency, high amplitude variations in the inductor during current limiting are avoided. By avoiding high amplitude variations in the inductor, the average current can be higher than in prior art solutions.

According to the invention, there is provided a control circuit for a boost converter as defined by the independent apparatus claim 1 and its corresponding independent method claim 11. Preferred embodiments are described by the dependent claims. The invention allows to implement a current limiter in a constant on time boost converter that allows coil current limitation while switching at the same frequency as without coil current limiting action, and that does not disturb the filtered battery voltage when current limiting. The current limiting options in the constant-on-time boost converter as described are comparable with those in a fixed frequency peak current mode controlled boost converter, but with a much simpler implementation. Usually, a boost converter behaves more or less as a voltage source where the output current, and thus the coil current, depends on the load. When the coil current reaches the maximum value however, it should behave as a current source where the boost voltage varies with the load and the coil current or battery current is limited to a (programmable) maximum value. A comparison with a DC power supply can be made here. The move to a current controlled converter can be done by changing the constant-on-time control to a constant-off-time (i.e., a constant duration of the energy discharging state) control in case of current limiting. During the constant-on-time control, the energy charging state has a constant duration, while during the constant-off-time control, the energy discharging state is the one having a constant duration. The start of the off-period (i.e., the energy discharging state) is already generated by the peak current limiter when $I_{COIL}=I_{MAX}$ and the overcurrent signal oc is produced. The off-time (i.e. energy discharging state) required to have a stable switching frequency can be generated similar to the generation of the on-time in case of constant-on-time control (when there is no current limiting).

In an example of the present disclosure, the off-time signal determines the duration of the discharging state $T_{OFF}$ based on the input voltage $V_{BAT}$, a switching frequency $f_{TARGET}$ at which the boost converter performs cycles and an output voltage $V_{BST}$ at the output of the boost converter such that:

$$T_{OFF} = \frac{V_{BAT}}{f_{TARGET}\, V_{BST}}$$

By providing a constant duration of the energy discharging state, the switching frequency of the boost converter circuit can be controlled.

In an example of the present disclosure, the switching means are configured to switch the boost converter between a first current operation mode and a second voltage operation mode based on whether a current at the inductor is higher than a predetermined maximum current.

In an example of the present disclosure, the off-time signal generation means comprises a capacitor and a comparison circuit wherein the capacitor is configured to store a voltage, wherein the comparison circuit comprises a first input, a second input, wherein the comparison circuit is configured to receive a reference voltage at the first input, to receive the stored voltage at the second input, and to generate the off-time signal by comparing the reference voltage and the stored voltage. This is a very efficient way of implementing the off-time signal generation means.

In an example of the present disclosure, the on-time signal generation means comprising another capacitor and another comparison circuit wherein the another capacitor is configured to store another voltage, wherein the another comparison circuit comprises a first input, a second input, wherein the another comparison circuit is configured to receive another reference voltage at the first input, to receive the stored voltage at the second input, and to generate an on-time signal by comparing the another reference voltage and the stored voltage. This is a very efficient way of implementing the on-time signal generation means. Alternatively, the same circuit maybe used for the off and on time signal generation means wherein the reference voltage is generated by a controllable voltage source that can be controlled to provide the voltage corresponding to the current limitation or to the voltage limitation operation modes depending on the operation mode of the boost converter circuit.

In an example of the present disclosure, the comparison means is further configured to receive the output voltage of the boost converter circuit, a minimum voltage and to decide whether the output voltage is higher than the minimum voltage; and the on-time signal generation means configured to generate the on-time signal based on whether the output voltage is higher than the minimum voltage.

In an example of the present disclosure, the maximum current is $I_{BAT,MAX} + \dfrac{DV_{BAT}}{2\,L_{BST}\,f_{BST}}$; wherein $I_{BAT,MAX}$ is a maximum current for a battery connected at the input of the boost converter circuit, $V_{BST}$ is the output voltage, $V_{BAT}$ is the input voltage, $L_{BST}$ is the inductance value of the inductor and $D = \dfrac{V_{BST} - V_{BAT}}{V_{BST}}$ is the duty cycle of the switch connecting the inductor to ground. This allows battery current limitation since an appropriate compensation current can be generated based on the predictable switching frequency during current limiting. In this way, accurate battery current limiter control can be provided.

According to the invention, there is further provided a boost converter circuit comprising the control circuit, an inductor, an input terminal configured to receive an input voltage and an output terminal configured to provide an output voltage and a method to operate said boost converter circuit.

The person skilled in the art will understand that the features described above may be combined in any way deemed useful. Moreover, modifications and variations described in respect of the system may likewise be applied to a method of operating the boost converter circuit.

BRIEF DESCRIPTION OF THE DRAWINGS

In the following, aspects of the invention will be elucidated by means of examples, with reference to the drawings. The drawings are diagrammatic and are not drawn to scale.

Figs. 1A-V show schematics of circuits for a boost converter and corresponding waveforms diagrams.
Fig. 2A shows an schematic of a control circuit for a boost converter according to an embodiment of the invention.
Fig. 2B a circuit according to an embodiment of the invention.
Fig. 3 shows a boost converter circuit according to an embodiment of the invention.
Figs. 4A-E show diagrams of time waveforms of several signals of the boost converter circuit of fig. 3 during operation.
Fig. 5 shows a flow diagram of a method to operate a control circuit according to an embodiment of the invention.
Figs. 6A-C, 7A-D and 8A-D show diagrams of the waveforms of several signals of the boost converter of fig. 3 when operated according to fig. 5.
Figs. 9A-H show diagrams of the waveforms of several signals of a boost converter according to an embodiment of the invention.
Fig. 10 shows a circuit according to an embodiment of the invention.
Fig. 11 shows a flowchart of a method of operating a control circuit for a boost converter.

DETAILED DESCRIPTION OF EMBODIMENTS

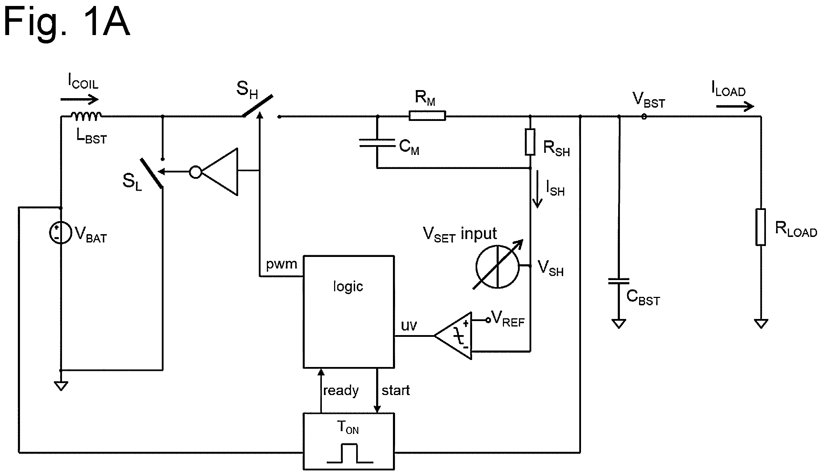

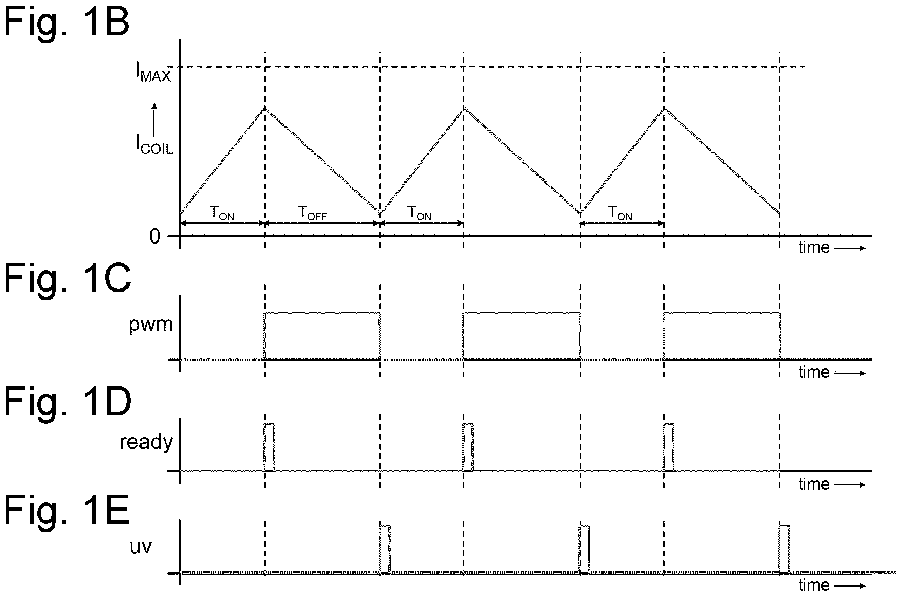

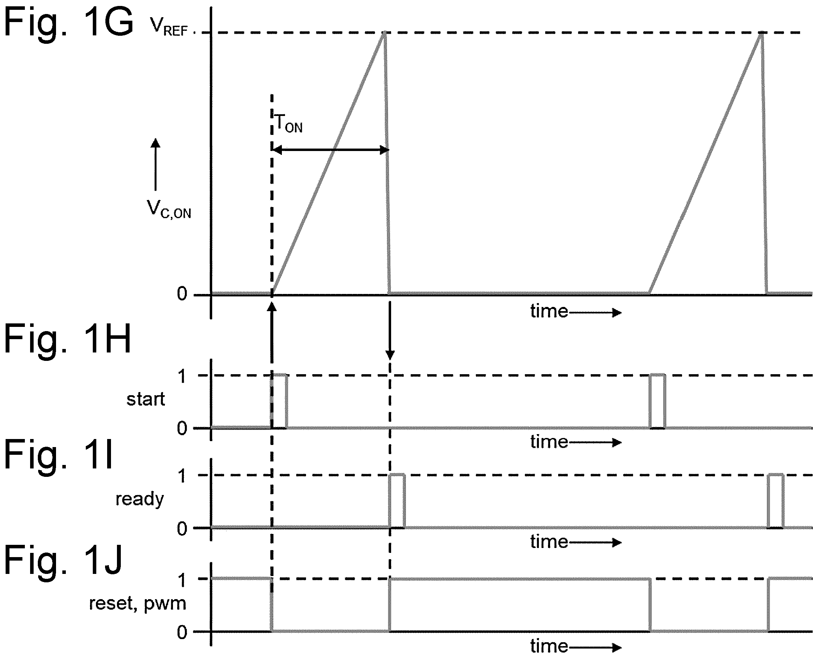

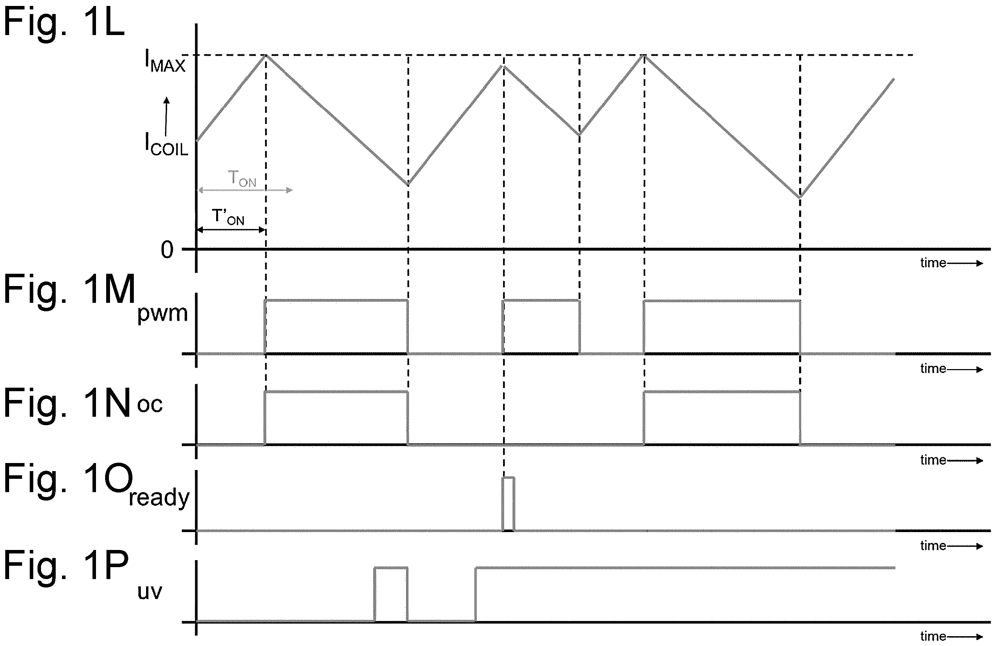

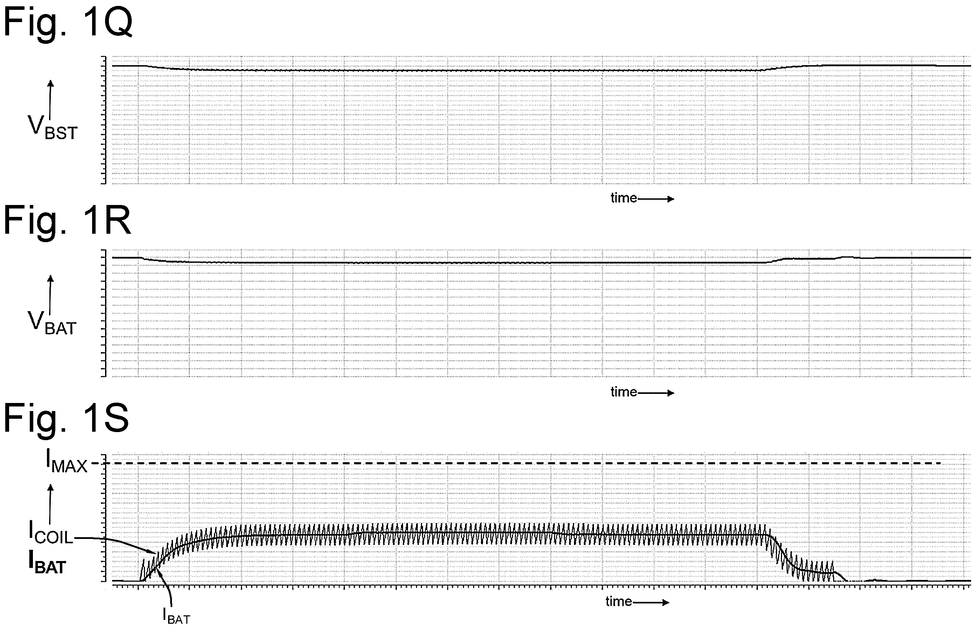

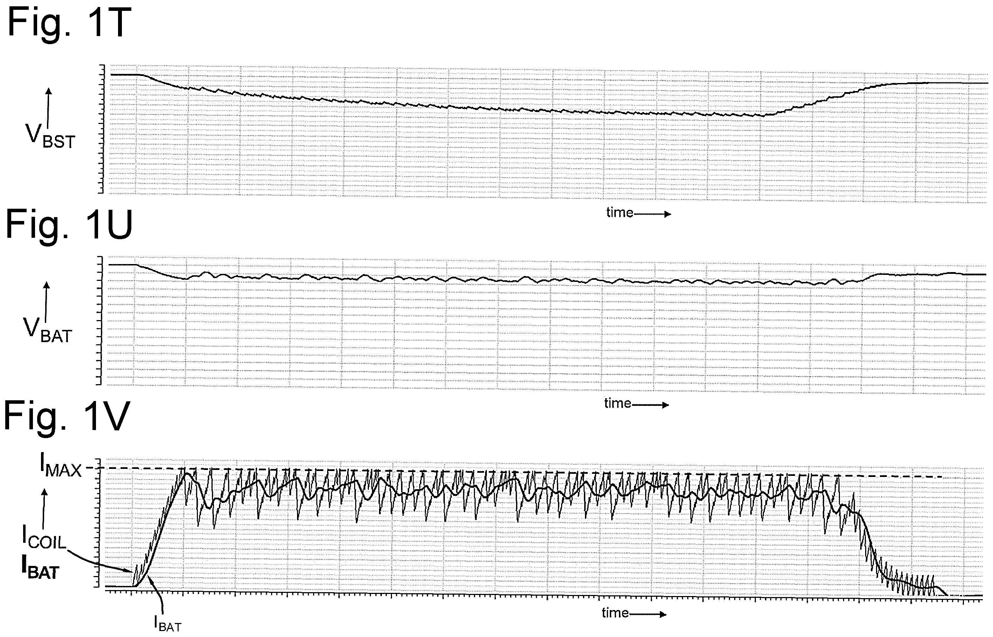

In the figures, the same reference numbers indicate elements that are similar in structure and function.
A Constant-On-Time (COT) boost converter is popular for its simplicity and high performance in both continuous conduction mode (CCM) and discontinuous conduction mode (DCM). An example of a COT boost converter topology is shown in figure **Error! Bookmark not defined.**A. A minimum voltage $V_{BST,TARGET}$ (i.e., a desired voltage at the output of the boost converter) is set by choosing the appropriate value for $I_{SH}$ using the adjustable current source of fig. 1A.

$$I_{SH} = \frac{V_{BST,TARGET} - V_{REF}}{R_{SH}}$$

In contrast with what the name of this DC-DC converter topology suggests, the on-time is usually chosen to depend on $V_{BAT}$ and $V_{BST}$ in such a way that the target switching frequency $f_{TARGET}$ in CCM is reached independent of $V_{BAT}$ and $V_{BST}$.

$$T_{ON} = \frac{V_{BST} - V_{BAT}}{f_{TARGET} \, V_{BST}}$$

During operation the on-time is started as soon as the output boost voltage $V_{BST}$ drops below the minimum voltage $V_{BST, TARGET}$ and the under voltage signal *uv* goes high. As a response to that signal, *pwm* goes low so that $S_L$ is closed and $S_H$ is opened and the current through coil $L_{BST}$ will increase. At the same time, *start* goes high, and the timer is started. When the on-time is reached, the timer generates a *ready* signal. This signal will cause *pwm* high so that $S_L$ is opened and $S_H$ is closed and the current through coil $L_{BST}$ will decrease while charging the output capacitor $C_{BST}$. As a result, *uv* will go low and as soon as the boost voltage has dropped below the minimum voltage again, the process repeats. The typical waveforms of $I_{COIL}$ and *pwm* during a constant load are illustrated in figs. 1B-E.

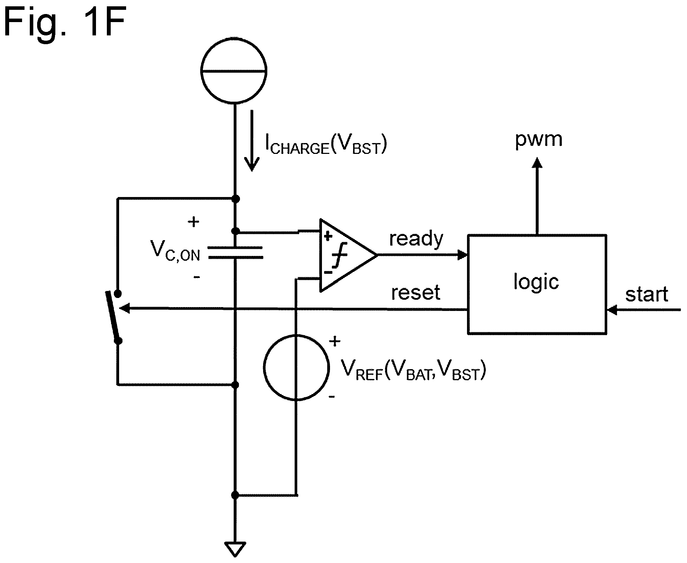

A method to generate $T_{ON}$ using a current source and a capacitor can be seen in figure 1F. Note that $I_{CHARGE}$ is proportional to $V_{BST}$ and $V_{REF}$ is proportional to $V_{BST}$ - $V_{BAT}$ to obtain the required target frequency in continuous conduction mode (CCM). When *start* goes high, *reset* goes low and $V_{C, ON}$ increases linearly with time until $V_{REF}$ is reached. The comparator generates a ready signal that resets $V_{C,ON}$ to 0. The logic is used to drive the switches $S_H$ and $S_L$. This is shown in figs. 1G-J.

A battery (and the PCB wiring to the battery) gives an impedance $R_{BAT}$ in series with the coil. This impedance usually has an inductive character so that the coil current ripple can cause a high voltage variation at the battery voltage connection of the coil on the PCB. Since also other applications may be connected at that point, it is usually decoupled to ground with a capacitor and thus creating a low pass filter between battery and coil. To avoid excessive currents in the coil $L_{BST}$, a current protection is usually implemented. In a power stage that contains switches $S_L$ and $S_H$ and that is designed for switching inductive loads, a common way to implement such a protection is:

- to measure the current in the inductor,
- to open the switch that was closed when the maximum current is detected,
- to close the switch that was open so that the inductor current will decrease,

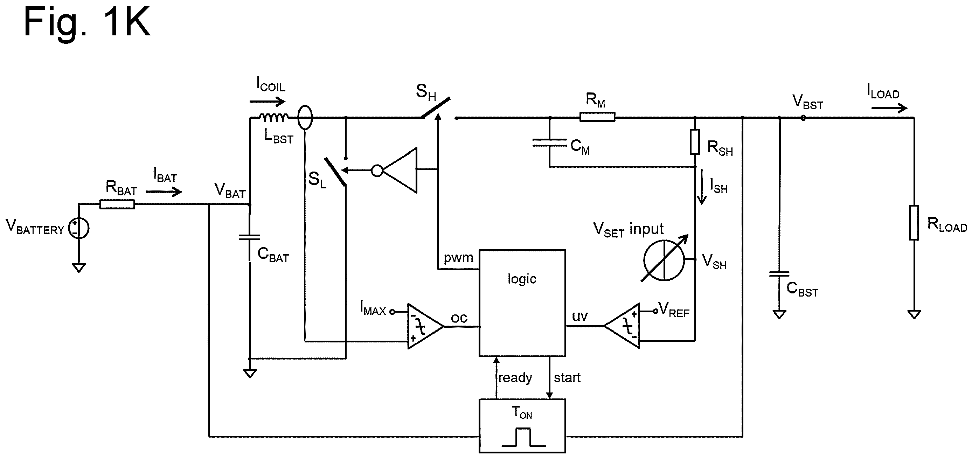

A COT boost converter with current limiter and battery decoupling can be seen in fig. 1K. A signal *oc* is set as soon as $I_{COIL}$ exceeds $I_{MAX}$ and reset when *pwm* goes low. Even before *ready* of the on-time generation goes high, *oc* forces $S_H$ to close and $S_L$ to open so that $I_{COIL}$ will no longer increase, but start decreasing. This overcurrent protection will nicely limit the maximum current. However, because $T_{ON}$ now deviates from the intended value as can be seen in figs. 1L-P where the overcurrent protection interferes in the first and third pwm pulse. Because the overcurrent signal interrupts the normal switching sequence, the constant-on-time control loop is now out of control and can no longer maintain the intended boost voltage. Of course the boost voltage will drop due to the current limiting, that is inevitable, but the inductor current during this limiting action has unpredictable low frequency patterns with high amplitude. The voltage on the battery decoupling capacitor $V_{BAT}$ is also affected by this current limiting behavior as can be seen in figs. 1Q-V where the response of the system to a moderate load step shown in figs. 1Q-S is compared with the response to a high load step with current limiting in figs. 1T-V.

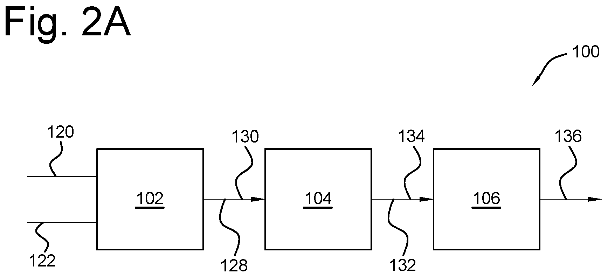

Fig. 2A shows an schematic of a control circuit 100 for a boost converter according to an embodiment of the invention. The control circuit 100 comprises comparison means 102, off-time signal generation means 104, and switching means 106.

The comparison means 102 of the control circuit 100 shown in Fig. 2A comprises a first input 120, a second input 122 and an output 128. The first input 120 is configured to receive information regarding an input current at an inductor of a boost converter circuit. The second input 122 is configured to receive a first threshold value indicating a predetermined maximum input current. The comparison means 102 is configured to decide whether the input current is higher than the predetermined maximum input current by comparing the information regarding the input current received at the first input 120 and the first threshold value received at the second input 122. The comparison means 102 may generate a signal at the output 128 indicating whether the input current is higher than the predetermined maximum input current.

The off-time signal generation means 104 of the control circuit 100 shown in fig. 2A comprises an input 130 and an output 132. The input 130 is configured to receive the signal generated by the comparison means 102 at the output 128. The off-time signal generation means 104 is further configured to generate an off-time signal at the output 132. The off-time signal is generated based on the signal received at the input 130. The off-time signal will be used to generate an energy discharging state of a next switching event of the boost converter circuit. The switching means 106 of the control circuit 100 shown in fig. 2A comprises an input 134 and an output 136. The input 134 of the switching means 106 is configured to receive the off-time signal at the output 132 of the off-time signal generation 104. The switching means 106 is configured to switch the boost converter to perform cycles by starting switching events wherein each cycle or switching event comprises an energy charging state in which an inductor stores energy provided by an input voltage at an input of the boost converter circuit and an energy discharging state in which the inductor provides energy to an output of the boost converter circuit. The switching means 106 will start a new cycle or switching event wherein the inductor will start charging energy and, when the current at the inductor reaches a maximum current, the comparison means 102 will indicate to the off-time signal generation means 104 that the inductor reaches the maximum current. The off-time signal generation means 104 will then generate the off-time signal at the output 132 which will be received by the switching means 106. The switching means 106 will then control the boost converter circuit to enter into an energy discharging state wherein the inductor starts discharging energy to the output of the boost converter circuit. The boost converter circuit will be in the energy discharging state until the off-time signal is deactivated.

The off-time signal will force the boost converter circuit to be in an energy discharging state for a constant amount of time $T_{OFF}$. The duration $T_{OFF}$ of the off-time signal may be chosen to depend on the input voltage $V_{BAT}$ of the boost converter circuit, the output voltage $V_{BST}$ of the boost converter circuit and the intended switching frequency $f_{TARGET}$ as indicated below:

$$T_{OFF} = \frac{V_{BAT}}{f_{TARGET} \, V_{BST}}$$

The comparison means 102, the off-time generator means 104 and the switching means 106 of the control circuit 100 may be connected in a different way that still provides the same functionality. For instance, the comparison means 102 may be configured to provide the information indicating whether the inductor current exceeds the maximum current to the switching means 106 and the switching means 106, based on that information may provide a signal to the off-time generation means 104 such that, based on that signal, the off-time generation means 104 will generate and send the off-time signal to the switching means 106. The switching means 106 will then switch accordingly the boost converter circuit. The control circuit 100 may comprise any other suitable form of connection among the different parts or any other elements. The comparison means 102, the off-time generation means 104 and the switching means 106 may comprise any kind of electrical elements and/or gate logic allowing to perform the corresponding function of each one. For instance, the comparison means 102 may comprise an operational comparator or any other gate logic element.

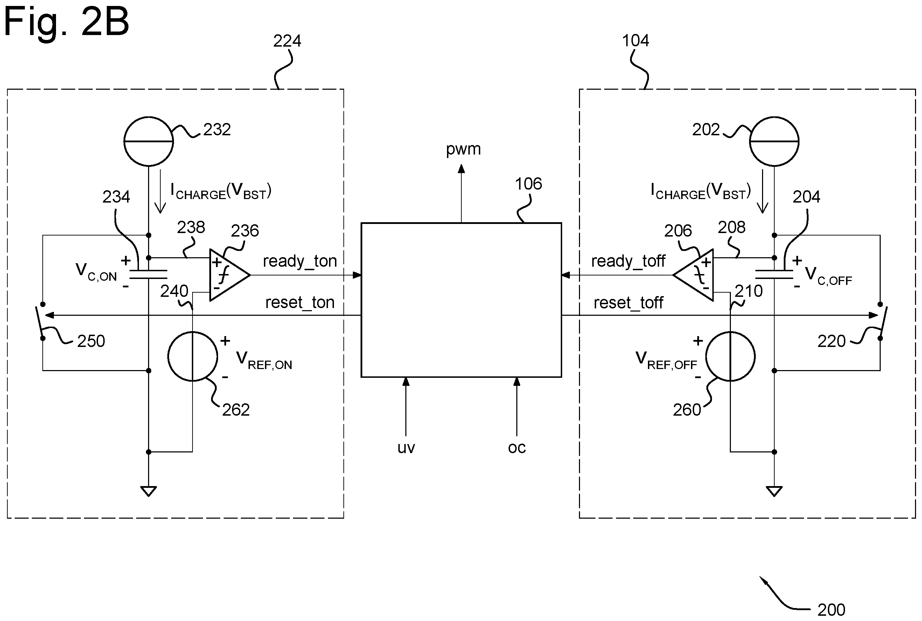

Fig. 2B shows a control circuit 200 according to an embodiment of the invention. The control circuit 200 comprises switching means 106 and off-time signal generation means 104. The control circuit 200 of fig. 2B also comprises on-time signal generation means 224 which can be very similar to the off-time signal generation means 104. The on-time signal generation means 224 will be used when current limiting is not necessary and the off-time signal generation means 104 will be used when current limiting is necessary (i.e., when the current in the inductor exceeds the maximum predetermined current). In this way, the switching means are configured to switch the boost converter between a first current operation mode (wherein the off-time signal generation means 104 will be used to determine the duration of the energy discharging state) and a second voltage operation mode (wherein the on-time signal generation means 224 will be used to generate the duration of the energy charging state) based on whether a current at the inductor is higher than the predetermined maximum current. The off-time signal generation circuit 104 in fig. 2B comprises a current source 202, a capacitor 204 and a comparator 206. The comparator 206 comprises a first input 208 configured to receive a voltage $V_{C,OFF}$ across the capacitor 204. The comparator 206 comprises a second input 210 configured to receive a reference voltage $V_{REF,OFF}$, wherein the reference voltage $V_{REF,OFF}$ is equal or proportional to the input voltage of the boost converter circuit $V_{BAT}$. The capacitor 204 is configured to store a voltage $V_{C,OFF}$ based on the feedback current $I_{CHARGE}$ that is proportional to the output voltage of the boost converter circuit $V_{BST}$. The comparator 206 generates a ready_toff signal based on the result of the comparison between the first input 208 and the second input 210. The switching means 106 is configured to receive the ready _toff signal based on said comparison and to generate a pwm signal to switch the control boost circuit to enter in an energy discharging state for a time $T_{OFF}$ equal to $\frac{V_{BAT}}{f_{TARGET} \, V_{BST}}$.

The switching means 106 is also configured to generate a reset_toff signal that controls a switch 220 to close such that a voltage $V_{C,OFF}$ across the capacitor 204 increases linearly with time until the first input 208 of the comparator 206 reaches the reference voltage $V_{REF,OFF}$ received at the second input 210 of the comparator 206. At that moment, the comparator 206 generates the ready_toff signal which opens the switch 220 and resets the voltage $V_{C,OFF}$ to zero. The reference voltage $V_{REF,OFF}$ is generated by a voltage source 260.

The on-time signal generation circuit 224 of fig. 2B is similar to the off-time generation circuit 104 and also comprises another capacitor 234 and another comparison circuit or comparator 236 wherein the another capacitor is configured to store another voltage $V_{C,ON}$, wherein the another comparison circuit comprises a first input 240, a second input 238, wherein the another comparison circuit is configured to receive another reference voltage $V_{REF,ON}$ at the first input, to receive the another voltage $V_{C,ON}$ at the second input, and to generate an on-time signal ready t_on by comparing the another reference voltage $V_{REF,ON}$ and the another voltage $V_{C,ON}$. The another reference voltage $V_{REF,ON}$ is generated by a voltage source 262. The signal ready_ton is provided to the switching means 106. The another reference voltage

$V_{REF,ON}$ generated by the voltage source 262 is equal or proportional to $V_{BST}$-$V_{BAT}$. The switching means 106 is configured to receive the ready_ton signal and to generate the pwm signal to switch the control boost circuit to enter in an energy charging state for a time $T_{ON}$ equal to

$$\frac{V_{BST}-V_{BAT}}{f_{TARGET}\,V_{BST}}.$$

The switching means 106 is also configured to generate a reset_ton signal that controls a switch 250 to reset the voltage $V_{C,\,ON}$ of the capacitor 234 to zero. When reset_ton is not active the switch 250 is open and the another voltage $V_{C,ON}$ across the another capacitor 234 increases linearly with time until the second input 238 of the another comparator 236 reaches the another reference voltage $V_{REF,\,ON}$ generated by the voltage source 262. At that moment, the another comparator 236 generates the ready_ton signal which opens the switch 250 and resets the another voltage $V_{C,ON}$ of the another capacitor 234 to zero.

The switching means 106 is configured to receive an overcurrent oc signal and an undervoltage uv signal wherein the oc signal and the uv signal will be generated by the comparison means 102 shown in fig. 2A. Though in fig. 2A the output 128 of the comparison means 102 is connected to the off-time signal generation means 104, as said before said output 128 can be connected to the switching means 106 such that the switching means 106 will send the reset_ton signal or the reset_toff signal respectively to the on-time signal generation 224 or the off-time signal generation 104. As said, in this way the switching means can switch the boost converter circuit between the first current operation mode wherein the off-time signal generation means 104 determine the duration of the energy discharging state and the second voltage operation mode wherein the on-time signal generation means 224 determine the duration of the energy charging state based on whether a current at the inductor is higher than the predetermined maximum current. The switching means will switch the boost converter circuit between the first current operation mode and the second voltage operation mode based on whether a current at the inductor is higher than the predetermined maximum current such that when the current at the inductor is higher than the predetermined maximum current the boost converter circuit will be working in the first current operation mode, and when the current at the inductor is not higher than the predetermined maximum current the boost converter circuit will be working in the second voltage operation mode. This allows to limit the maximum current while still providing a stable switching frequency.

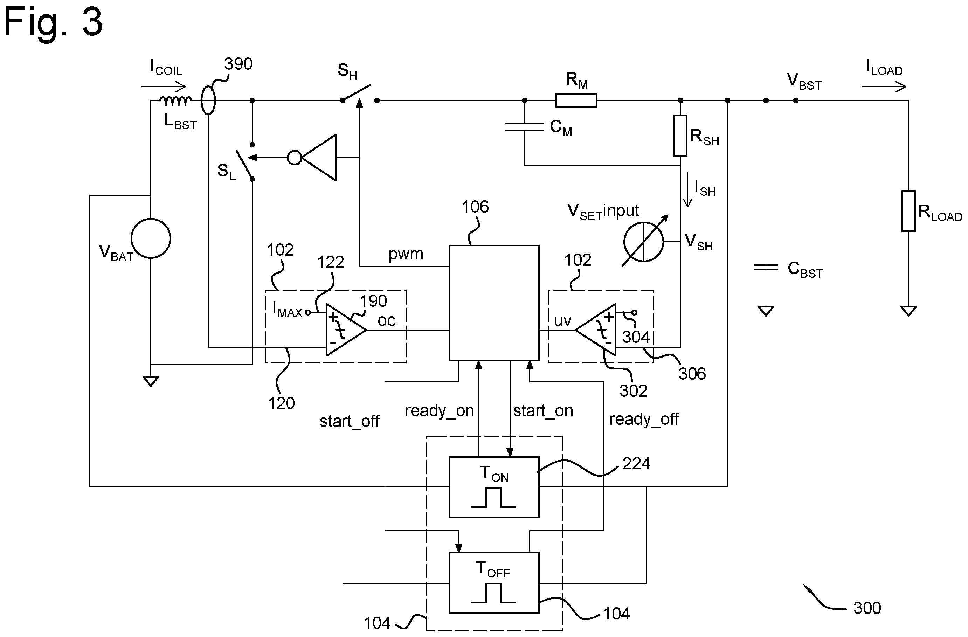

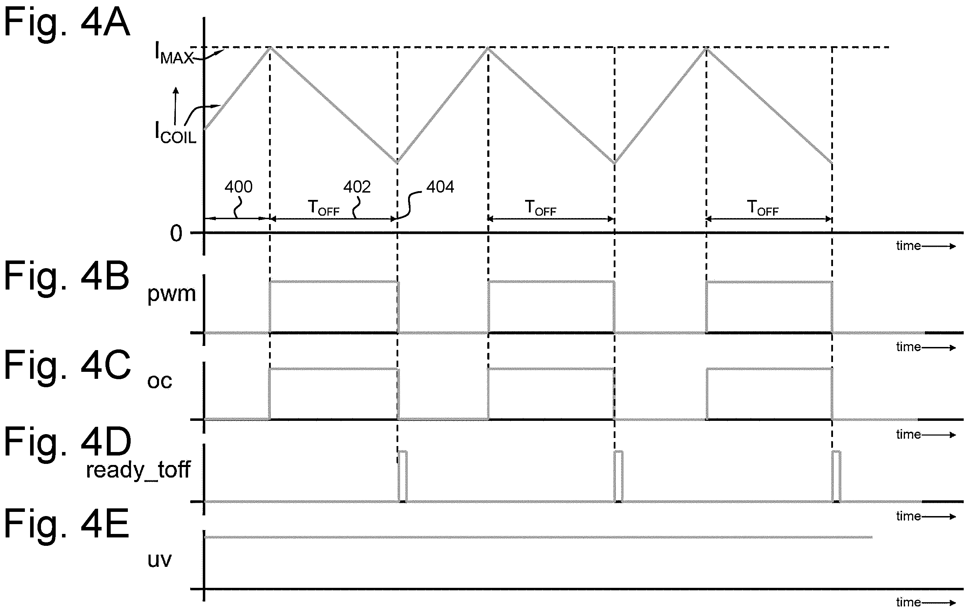

Fig. 3 shows a boost converter circuit 300 according to an embodiment of the invention. Figs. 4A-E show diagrams of time waveforms of several signals of the boost converter circuit of fig. 3 during operation. Fig. 4A illustrates the value of $I_{COIL}$ as a function of time in the boost converter circuit of fig. 3. The current $I_{COIL}$ is the current through the inductor $L_{BST}$ shown in fig. 3. Figs. 4B-E illustrate respectively the pwm signal, the oc signal, the ready_toff signal and the uv signal as a function of time.

The boost converter circuit 300 of fig. 3 comprises an inductor $L_{BST}$ connected at an input voltage $V_{BAT}$ generated by a battery, for instance, and a switch $S_L$ and a switch $S_H$. The boost converter circuit 300 of fig. 3 comprises further switching means 106, comparison means 102 and off and on-time signal generation means 104 and 224. The comparator means 102 comprises a comparator 190 configured to receive the maximum current $I_{MAX}$ at the second input 122, to receive the current passing through the inductor $I_{COIL}$ (and measured by a current measurement device 390) at a first input 120 and to generate the oc signal indicating that the inductor current $I_{COIL}$ exceeds the maximum current $I_{MAX}$. The comparator means 102 further comprises the comparator 302 comprising a first input 304 configured to receive a minimum voltage, and comprising a second input 306 configured to receive the voltage $V_{SH} = V_{BST}$-$I_{SH}$*$R_{SH}$ and to generate the uv signal indicating that the output voltage $V_{BST}$ is below the minimum voltage. When the oc signal is activated, the switching means 106 switches to the off-time operation mode (i.e., the first current operation mode) and activates the off-signal generation 104. When the uv signal is de-activated, the switching means 106 switches to the on-time operation mode (i.e., the second voltage operation mode) and activates the on-signal generation 104. Toggling between the two modes of operation (voltage mode and current mode) is implemented in logic and initiated by the overcurrent signal oc for moving to current mode, and the NOT(uv) signal (i.e., the invert of the signal uv) indicating the boost voltage is above the minimum voltage . During a time interval 400 shown in fig. 4A, the switch $S_L$ is closed and the switch $S_H$ is open in order to connect the inductor $L_{BST}$ of fig. 3 to the ground. When the inductor $L_{BST}$ is connected to ground, the boost converter circuit 300 enters into an energy charging state in which current flows through the inductor $L_{BST}$ and the inductor $L_{BST}$ stores some energy by generating a magnetic field. The current $I_{COIL}$ in the inductor $L_{BST}$ increases during said time interval 400 as it can be as shown in fig. 4A. When the inductor current $I_{COIL}$ reaches the maximum current $I_{MAX}$, the overcurrent signal ov is activated as shown in fig. 4C and the switching means 106 sends a control signal pwm, as shown in fig. 4B, to open the switch $S_L$ in order to disconnect the inductor $L_{BST}$ from the ground, and to close the switch $S_H$ in order to connect the inductor $L_{BST}$ to the output $V_{BST}$ and the boost converter circuit enters into an energy discharging state in which, during the time interval 402 shown in fig. 4A, the energy previously accumulated in the inductor $L_{BST}$ is transferred to the output $V_{BST}$ and the current $I_{COIL}$ in the inductor $L_{BST}$ starts decreasing during a period $T_{OFF}$ after which the oc signal is de-activated, and the signal pwm is set to zero thereby switching the switches $S_H$ and $S_L$ of the boost converter circuit such that a new charging period starts in 404. Time intervals 400 and 402 are part in this case of a continuous mode event wherein a completed switching cycle has been performed by the circuit. A new continuous mode event starts after time interval 402.

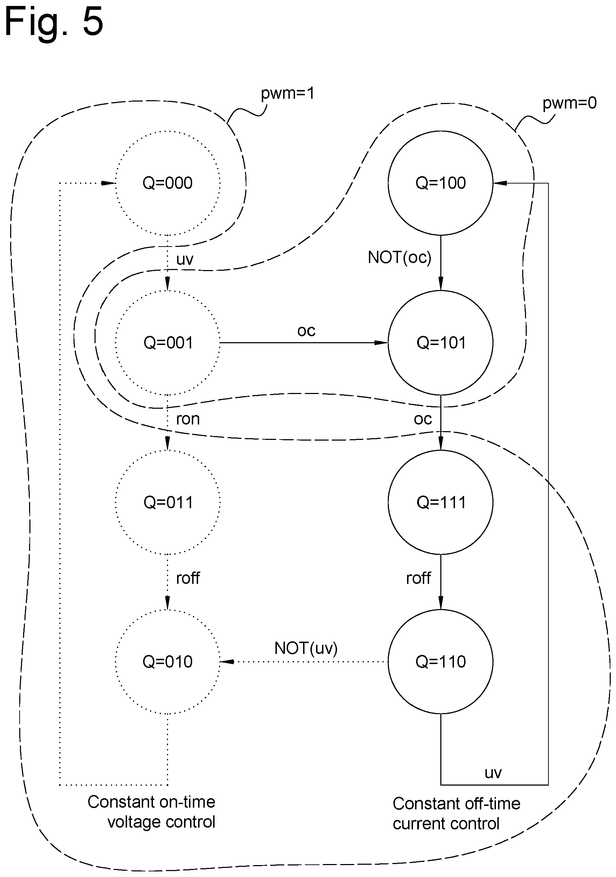

Fig. 5 shows a flow diagram of a method to operate a control circuit according to an embodiment of the invention wherein a three-bit state machine Q is used. The switching cycles in both voltage and current mode are controlled as can be seen in fig. 5. The operation of the state machine is described below, discussing every state, starting in state Q=000.

- State Q=000
  The system is in voltage mode, using constant on-time control (i.e., the second voltage operation mode). The pwm signal is active and a rising edge on the under voltage uv signal will initiate the on time charging state by a transition to state Q=001.
- State Q=001

  When Q=001, the signal pwm is made zero, so the switch $S_L$ in fig. 3 will be switched on, the switch $S_H$ will be switched off and the current through the inductor $I_{COIL}$ will increase. Also, a timer is started in this state by the reset_ton signal which will have a value of zero and the on voltage $V_{C,ON}$ will ramp-up until it exceeds the on reference voltage $V_{REF,ON}$. The comparator 236 shown in fig. 2B will then generate a rising edge on the ready_ton (ron in fig. 5)signal that will cause the transition to state Q=011.
  However, if the over current signal oc goes high before the ready_ton signal, the transition to state Q=101 is made and constant-off-time-control (i.e. the first current operation mode) is entered wherein the current is limited.

- State Q=011
  In state Q=011 the signal pwm is activated by the value 1 so the switch $S_L$ will be switched off, the switch $S_H$ will be switched on and the current through the inductor $I_{COIL}$ will be dumped to the output capacitor and decrease. A transition to state 010 is made automatically (by activating the ready_toff signal called roff in fig. 5) after a certain delay time that guarantees a minimum time for the signal pwm = 1.
- State Q=010
  A transition is made to Q=000 automatically. (This state is only used for transition from 011 to 000 to avoid resetting multiple bits simultaneously).
- State Q=101
  This state is entered after a rising edge on the over current signal oc in state Q=001 (while the switch $S_L$ is on and the signal pwm is equal to zero). Now, the current loop has been entered and constant-off-time control is used. The oc signal initiated the off-time signal and a transition to state 111 is made immediately.
- State Q=111
  Here the signal pwm is equal to one so that the switch $S_L$ (that experienced the over current event) is switched off and the switch $S_H$ will be switched on and the current through the inductor $I_{COIL}$ will decrease. The signal reset_toff is low so that the voltage $V_{C,OFF}$ in the capacitor 204 will ramp-up until it exceeds the reference voltage $V_{REF,OFF}$. The comparator 206 will then generate a rising edge on the ready _toff (roff) signal that will initiate the transition to state Q=110.
- State Q=110
  If the output voltage is still below target (i.e., the signal uv is equal to one), the system remains in the current mode and the transition to state 100 is made automatically. However, if the output boost voltage is back to a level above the target level (i.e., the uv signal is zero), the transition to state 010 is made and the system jumps back to voltage control (second voltage operation mode).
- State Q=100
  In state Q=100, the signal pwm is equal to zero and causes the switch $S_L$ to close and the switch $S_H$ to open, and the current through the inductor $I_{COIL}$ increases. The oc signal will be reset to zero causing a transition to state Q=101 where it waits until the inductor current reached the overcurrent level again.

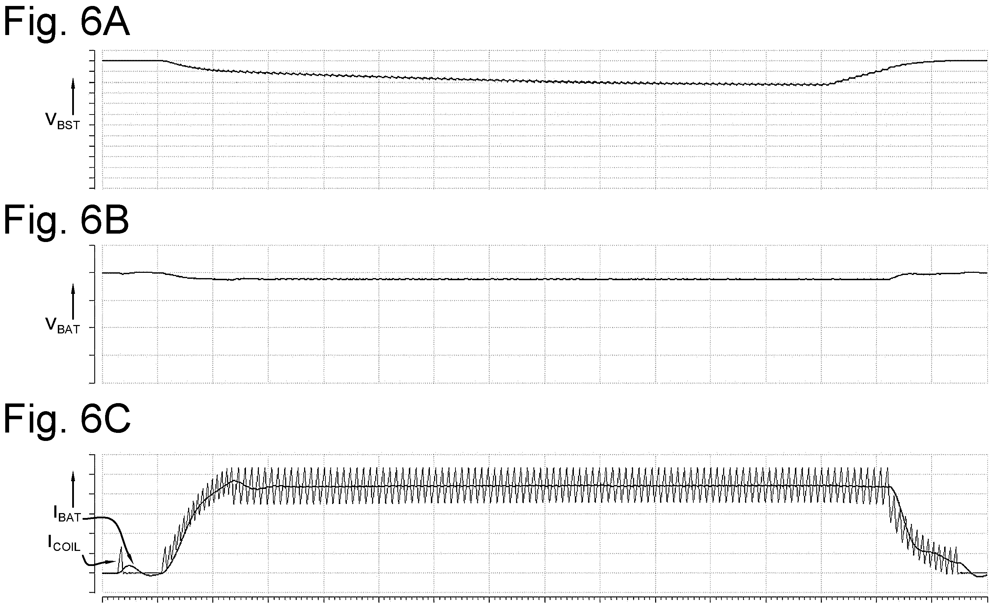

Figs. 6A-C show diagrams of the waveforms of the output voltage $V_{BST}$, the input voltage $V_{BAT}$, and the inductor current $I_{COIL}$ and the battery current $I_{BAT}$, respectively, of the boost converter of fig. 3 when operated according to the method shown in fig. 5. In Figs. 6A-C, the response of the system to a heavy load step with current limiting can be seen. The frequency during current limiting is constant, the input current $I_{BAT}$ and the input voltage $V_{BAT}$ have a smooth behavior, and the peak current limiter $I_{MAX}$ can be used for battery current limitation when the appropriate compensation for the chosen switching frequency is used.

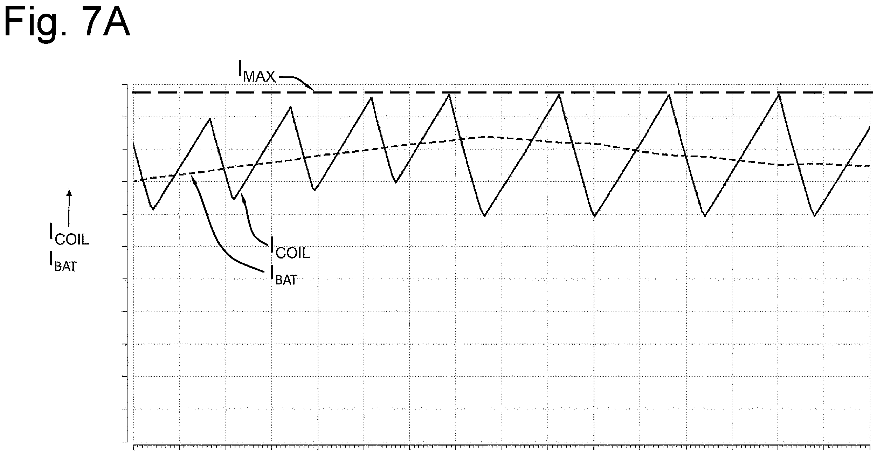

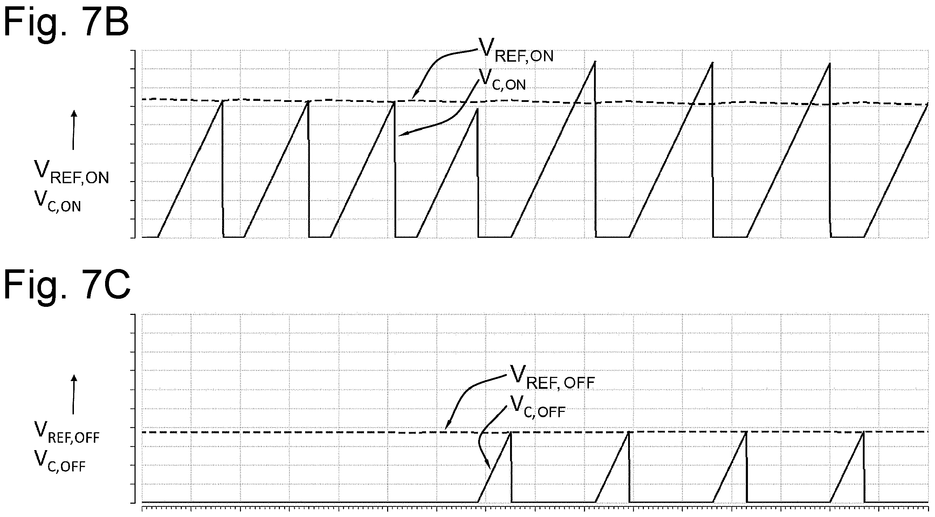

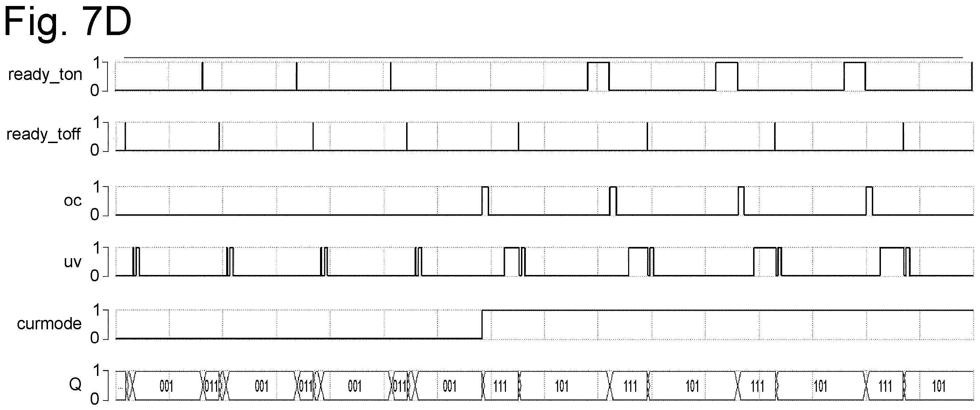

Figs. 7A-D show diagrams of the waveforms of the inductor current $I_{COIL}$, the maximum current $I_{MAX}$ and the battery current $I_{BAT}$ (fig. 7A), the voltages $V_{REF,ON}$ and $V_{C,ON}$ (fig. 7B), the voltages $V_{REF,OFF}$ and $V_{C,OFF}$ (fig. 7C), and the signals ready_ton, ready_toff, curmode, oc and state Q (fig. 7D), respectively, of the boost converter of fig. 3 when operated according to the state machine shown in fig. 5 when the current mode is entered and the oc signal determines the start of the energy discharging period while $T_{OFF}$ determines the length of the energy discharging period. The signal curmode is 1 when the current mode is on and 0 when the current mode is off. Figs. 7A-D share a common time line as indicated by the grid lines shown in said figures.

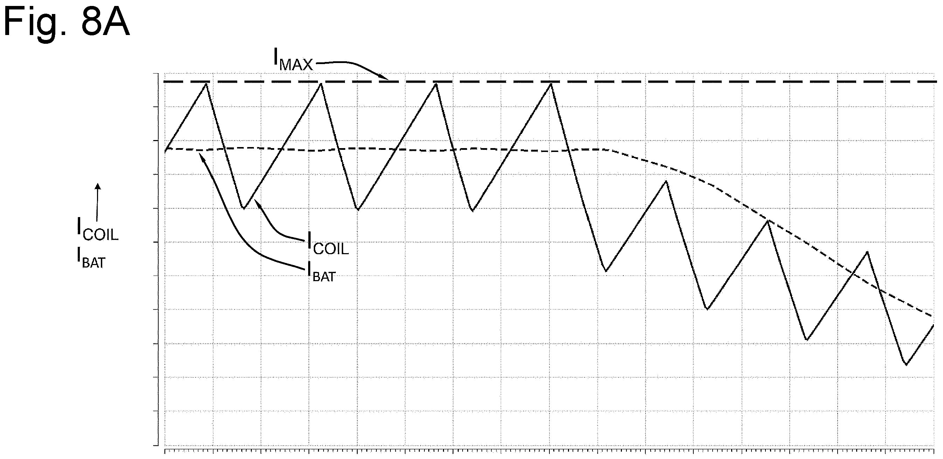

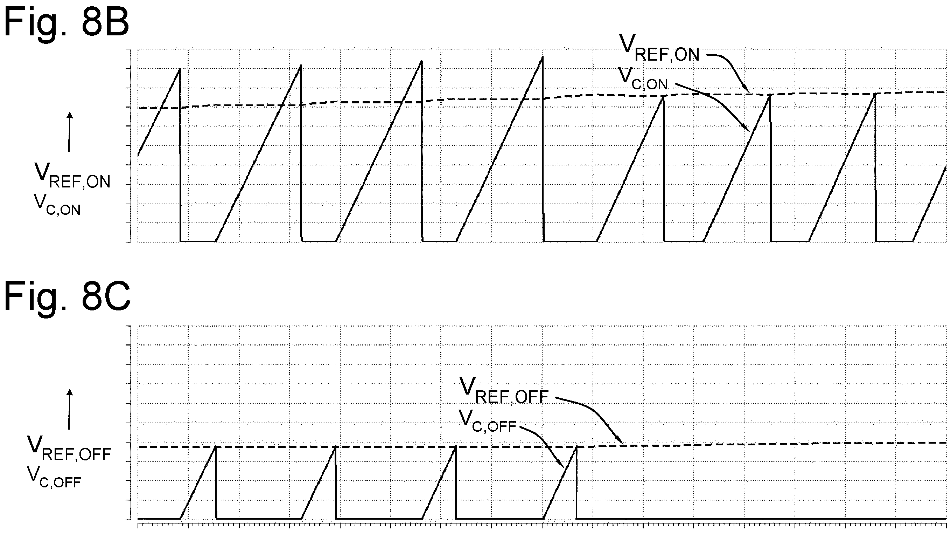

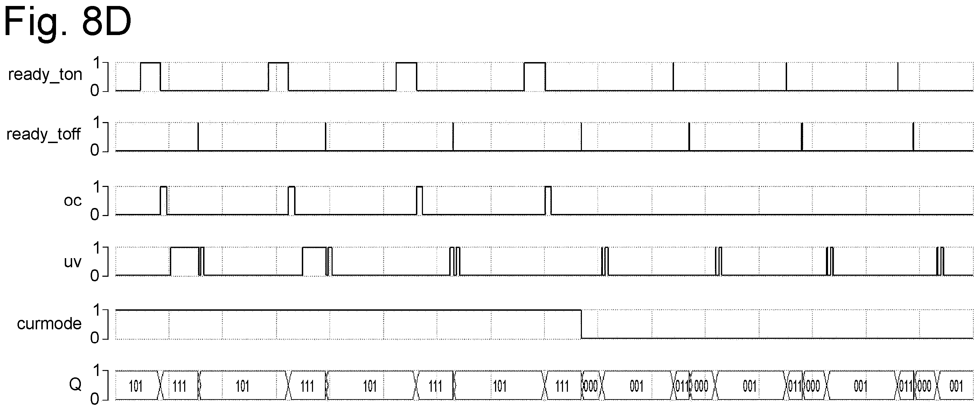

Figs. 8A-D show the same signals as Figs. 7A-D , respectively, when the current mode is left, and also share a common time line as indicated by the grid lines shown in said figures. The first time when the uv signal goes low while state Q=110, the state Q will go to 010 and the curmode signal will go to zero and constant-on-time control is resumed.

Now that the frequency in current mode is controlled, just as in the case of voltage mode, the peak-peak ripple current amplitude $I_R$ is known and therefore also the difference between peak- and average coil current is known. This means that a battery current limit $I_{BAT,MAX}$ can be implemented by adding a peak-to-average compensation current $\frac{I_R}{2}$ to the required maximum battery current limit $f_{BAT,MAX}$, and using it as a peak current limit:

$$I_{PEAK,MAX} = I_{BAT,MAX} + \frac{I_R}{2} = I_{BAT,MAX} + \frac{DV_{BAT}}{2 L_{BST} f_{BST}}$$

$$D = \frac{V_{BST} - V_{BAT}}{V_{BST}}$$

In the following, it will be explained how to create the peak-to-average compensation current term:

$$\frac{DV_{BAT}}{2 L_{BST} f_{BST}}$$

Since the required peak-to-average compensation is proportional with the duty cycle D, it can be created using a linear ramp current $I_{P2A}$ on top of the programmed maximum battery current $I_{BAT,MAX}$ in the following way:

$$I_{PEAK,MAX} = I_{BAT,MAX} + I_{P2A}(t)$$

Where the compensation linear ramp current $I_{P2A}$ increases linear with time:

$$I_{P2A}(t) = \frac{V_{BAT}}{2 L_{BST}} t$$

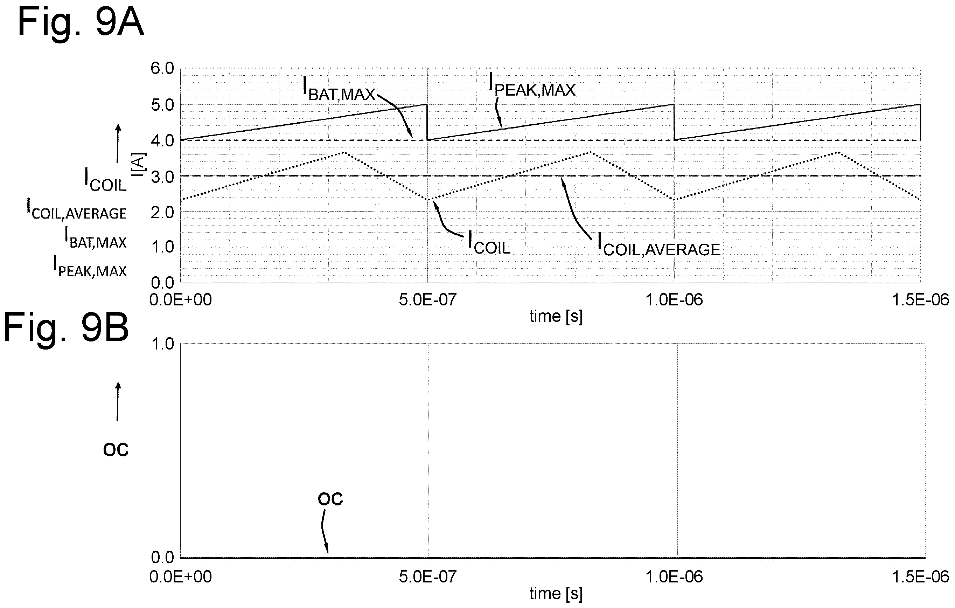

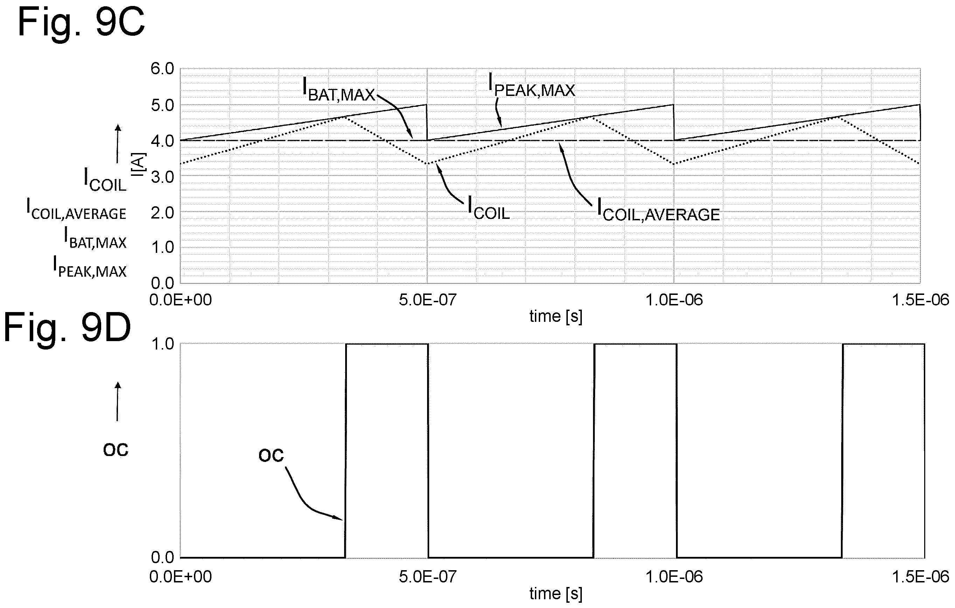

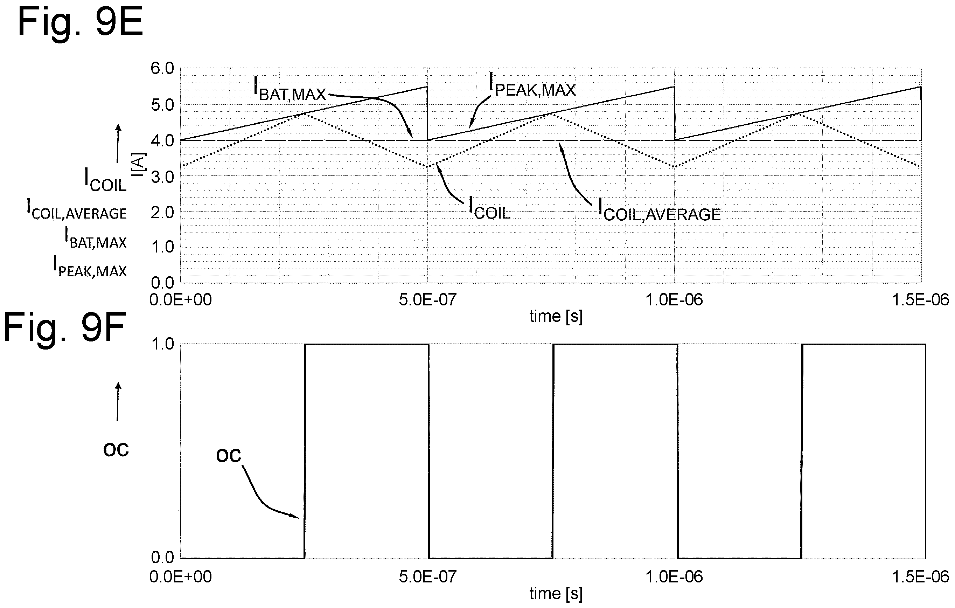

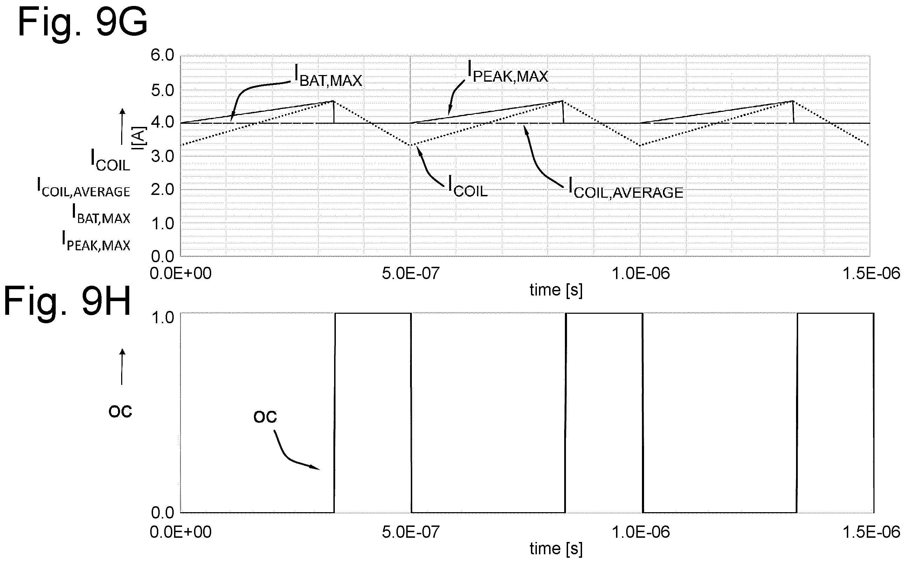

At the moment where the off time is started at $t = DT = D/f_{BST}$, the ripple amplitude will be compensated as shown in figs. 9A-9F wherein the average coil current $I_{COIL,AVERAGE}$, the coil current $I_{COIL}$, the peak current limit $I_{PEAK,MAX}$, the maximum battery current $I_{BAT,MAX}$, and the overcurrent oc signal are illustrated, wherein $I_{BAT,MAX}$ and $I_{COIL,AVERAGE}$ are equal in figs. 9C, 9E and 9G and therefore overlap. The average coil current $I_{COIL,AVERAGE}$ is then limited to the programmed maximum battery current $I_{BAT,MAX}$ independent of battery voltage or boost voltage.

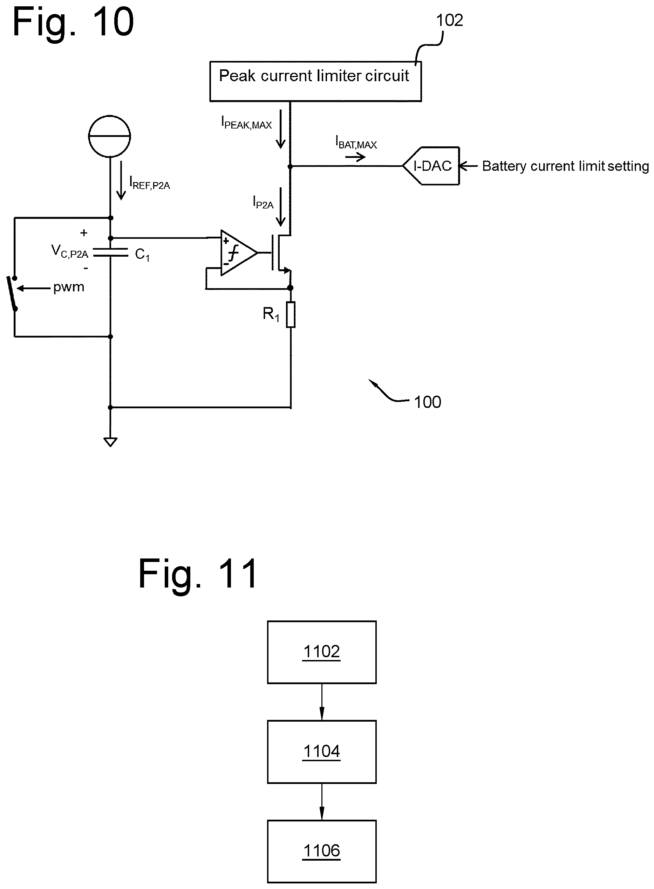

As soon as the pwm signal is activated (pwm = 1 here) and the switch $S_L$ is no longer closed, the compensation linear ramp current $I_{P2A}$ can be reset since there it is not required until the next time cycle where the signal *pwm* is no longer active (pwm=0). This can be seen in figs. 9G-H, where the same situation is presented as in figs. 9C-D but with resetting the compensation linear ramp current $I_{P2A}$ when the signal *pwm* is high.. The simulations shown in figs. 9A-D,and figs. 9G-H have been performed for $V_{BST}$=12V, $V_{BAT}$=4V, L=1□H and $f_{BST}$=2MHz. The simulations shown in figs. 9E-F have been performed for $V_{BST}$=6V, $V_{BAT}$=4V, L=1□H and $f_{BST}$=2MHz. Fig. 10 shows a possible implementation of a circuit 100 comprising a peak current limiter circuit 102 wherein a reference current $I_{REF,P2A}$ that is proportional with $V_{BAT}/L_{BST}$ is charging a capacitor $C_1$ generating a voltage $V_{C,P2A}$ that is linear with time. The signal *pwm* is used to reset the circuit 100 by discharging the capacitor. The ramping capacitor voltage $V_{C,P2A}$ is converted to a current $I_{P2A}$ and combined with the programmed maximum battery current $I_{BAT,MAX}$ to generate $I_{PEAK,MAX}$ that is be used in the current limiter circuit for the switch $S_L$. The circuit 100 of fig. 10 also comprises a digital to analog convertor I-DAC configures to receive the battery current limit setting. Fig. 11 shows a flowchart of a method of operating a control circuit 100 for a boost converter. The method comprises a step 1102 of switching, by switching means 106, the boost converter to perform cycles wherein each cycle comprises an energy charging state in which an inductor stores energy provided by an input voltage $V_{BAT}$ and an energy discharging state in which the inductor provides energy to an output of the boost converter. Then the method proceeds further to step 1104 which comprises deciding, by comparison means 102, whether a current at the inductor is higher than a predetermined maximum current. Finally, the method goes to step 1106 comprising generating, by off-time signal generation means 104, an off-time signal based on whether the current at the inductor is higher than a predetermined maximum current, wherein the off-time signal determines a duration of a discharging state of a next switching event and wherein the switching means is configured to switch the boost converter based on the generated off-time signal.

The examples and embodiments described herein serve to illustrate rather than limit the invention. The invention is only limited by the appended claims.

## Claims

1. A control circuit (100) for a boost converter wherein the control circuit comprises:

   switching means (106) configured to switch the boost converter to perform cycles wherein each cycle comprises an energy charging state in which an inductor stores energy provided by an input voltage ($V_{BAT}$) and an energy discharging state in which the inductor provides energy to an output voltage ($V_{BST}$) of the boost converter;
   comparison means (102) configured to make a determination whether an inductor current at the inductor is higher than a predetermined maximum current and to end the energy charging state if the inductor current is higher than the predetermined maximum current;
   wherein the switching means (106) is configured to:

   switch the boost converter circuit (300) from a voltage operation mode to a current operation mode when the inductor current is higher than the predetermined maximum current,
   switch the boost converter circuit (300) from the current operation mode to the voltage operation mode when the output voltage rises to a minimum output voltage,

   wherein the voltage operation mode is configured to switch from the discharging state to the charging state when the output voltage drops to the minimum output voltage;
   off-time signal generation means (104) configured to generate an off-time signal in the current operation mode, wherein the off-time signal generation means is configured to determine a duration $T_{OFF}$ of the energy discharging state of a next switching event, wherein the duration $T_{OFF}$ is constant; and
   on-time signal generation means (224) configured to generate an on-time signal in the voltage operation mode, wherein the on-time signal generation means is configured to determine a duration $T_{ON}$ of the energy charging state of a next switching event, wherein the duration $T_{ON}$ is constant.

2. The control circuit according to any of claim 1, wherein the off-time signal generation means is configured to determine the duration $T_{OFF}$ of the energy discharging state based on the input voltage $V_{BAT}$, a switching frequency $f_{TARGET}$ at which the boost converter performs cycles and the output voltage $V_{BST}$ at the output of the boost converter such that:

$$T_{OFF} = \frac{V_{BAT}}{f_{TARGET} \, V_{BST}}$$

3. The control circuit according to any of the previous claims, wherein the switching means (106) is further configured to connect inductor ($L_{BST}$) to ground and start the energy charging state for the boost converter circuit (300), wherein the current ($I_{COIL}$) flows through the inductor ($L_{BST}$) and the inductor ($L_{BST}$) stores energy by generating a magnetic field during the energy charging state,

   wherein the current ($I_{COIL}$) in the inductor ($L_{BST}$) increases during the energy charging state, and
   wherein the switching means (106) is further configured to disconnect inductor ($L_{BST}$) from ground and connect inductor ($L_{BST}$) to the output voltage ($V_{BST}$) in response to the current ($I_{COIL}$) at the inductor ($L_{BST}$) surpassing the predetermined maximum current and start the discharging state for the boost converter circuit (300), wherein the stored energy in the inductor ($L_{BST}$) is transferred to the output voltage ($V_{BST}$) during the discharging state.

4. The control circuit according to claim 3, wherein the switching means is configured to open and close a first switch ($S_L$) and a second switch ($S_H$) of the boost converter, wherein the switching means opens the first ($S_L$) and closes the second switch ($S_H$) in response to generating the off-time signal to enter the discharging state by disconnecting the inductor ($L_{BST}$) from ground and connecting the inductor ($L_{BST}$) to the output voltage ($V_{BST}$), and wherein the switching means closes the first ($S_L$) and opens the second switch ($S_H$) in response to generating the on-time signal to enter the charging state by connecting the inductor ($L_{BST}$) to ground and disconnecting the inductor ($L_{BST}$) to the output voltage ($V_{BST}$).

5. The control circuit according claim 4, wherein the off-time signal generation means (104) comprises a capacitor (204) and a comparison circuit (206) wherein the capacitor is configured to store a voltage $V_{C,OFF}$, wherein the comparison circuit comprises a first input (210), a second input (208), wherein the comparison circuit is configured to receive a reference voltage $V_{REF,OFF}$ at the first input, to receive the voltage $V_{C,OFF}$ at the second input, and to generate the off-time signal by comparing the reference voltage $V_{REF,OFF}$ and the voltage $V_{C,OFF}$.

6. The control circuit according claim 5, wherein the on-time signal generation means (224) comprising another capacitor (234) and another comparison circuit (236) wherein the another capacitor is configured to store another voltage $V_{C,ON}$, wherein the another comparison circuit comprises a first input (240), a second input (238), wherein the another comparison circuit is configured to receive another reference voltage $V_{REF,ON}$ at the first input, to receive the another voltage $V_{C,ON}$ at the second input, and to generate the on-time signal by further comparing the another reference voltage $V_{REF,ON}$ and the another voltage $V_{C,ON}$.

7. The control circuit according to any of the previous claims, wherein the predetermined maximum current is

$$I_{BAT,MAX} + \left(1 - \frac{V_{BAT}}{V_{BST}}\right) \frac{V_{BAT}}{2\, L_{BST}\, f_{BST}}$$ ; wherein $I_{BAT,MAX}$ is a maximum current for a battery connected at the input of the boost converter circuit, $V_{BST}$ is the output voltage, $V_{BAT}$ is the input voltage, $f_{BST}$ is the switching frequency and $L_{BST}$ is the inductance value of the inductor.

8. The control circuit according to any of the previous claims wherein the switching means are implemented as a state machine.

9. The control circuit according to claim 9, wherein the state machine comprises eight states and is configured to perform a transition from one of the eight states to another one of the eight states based on whether the current at the inductor is higher than the predetermined maximum current.

10. A boost converter circuit (500) comprising:

    the control circuit according to any of claims 1-9; and
    an input terminal configured to receive the input voltage ($V_{BAT}$) .

11. A method of operating a control circuit (100) for a boost converter wherein the method comprises:

    switching, by switching means (106), the boost converter to perform cycles wherein each cycle comprises an energy charging state in which an inductor stores energy provided by an input voltage ($V_{BAT}$) and an energy discharging state in which the inductor provides energy to an output of the boost converter;
    determining, by comparison means (102) configured to make a determination whether a current at the inductor is higher than a predetermined maximum current and to end the energy charging state if the inductor current is higher than the predetermined maximum current;
    wherein the switching means (106) is configured to:

        switch the boost converter circuit (300) from a voltage operation mode to a current operation mode when the inductor current is higher than the predetermined maximum current,
        switch the boost converter circuit (300) from the current operation mode to the voltage operation mode when the output voltage rises to a minimum output voltage,

    wherein the voltage operation mode is configured to switch from the discharging state to the charging state when the output voltage drops to the minimum output voltage;
    generating, by off-time signal generation means (104), an off-time signal in the current operation mode, wherein the off-time signal
    generation means is configured to determine a duration of the energy discharging state $T_{OFF}$ of a next switching event, wherein the duration $T_{OFF}$ is constant; and

generating, by an on-time signal generation means (224), an on-time signal.

**12.** in the voltage operation mode, wherein the on-time signal generation means is configured to determine a duration $T_{ON}$ of the energy charging state of a next switching event, wherein the duration $T_{ON}$ is constant. The method of operating the control circuit (100) according to claim 12, further comprising closing , by the switching means, a first switch ($S_L$) and opening, by the switching means, a second switch ($S_H$), in response to generating the off-time signal.

**13.** The method of operating the control circuit (100) according to claim 11 or 12, wherein the off-time signal generation means (104) comprises a capacitor (204) and a comparison circuit (206) wherein the capacitor is configured to store a voltage ($V_{C,OFF}$), wherein the comparison circuit comprises a first input (210), a second input (208), wherein the comparison circuit is configured to receive a reference voltage ($V_{REF,OFF}$) at the first input, to receive the voltage $V_{C,OFF}$ at the second input, and to generate the off-time signal by comparing the reference voltage and the voltage $V_{C,OFF}$.

**14.** The method of operating the control circuit (100) according to claim 13, wherein the on-time signal generation means (224) comprises another capacitor (234) and another comparison circuit (236) wherein the another capacitor is configured to store another voltage ($V_{C,ON}$), wherein the another comparison circuit comprises a first input (240), a second input (238), wherein the another comparison circuit is configured to receive another reference voltage ($V_{REF,ON}$) at the first input, to receive the another voltage $V_{C,ON}$ at the second input, and to generate the on-time signal by further comparing the another reference voltage and the another voltage $V_{C,ON}$.

**Patentansprüche**

**1.** Steuerschaltung (100) für einen Aufwärtswandler, wobei die Steuerschaltung Folgendes umfasst:

Schaltmittel (106), das so konfiguriert ist, dass es den Aufwärtswandler umschaltet, um Zyklen auszuführen, wobei jeder Zyklus einen Energieladezustand, in dem ein Induktor Energie speichert, die von einer Eingangsspannung ($V_{BAT}$) bereitgestellt wird, und einen Energieentladezustand umfasst, in dem der Induktor Energie für eine Ausgangsspannung ($V_{BST}$) des Aufwärtswandlers bereitstellt;
Vergleichsmittel (102), das so konfiguriert ist, dass es bestimmt, ob ein Induktionsstrom an dem Induktor höher als ein vorbestimmter Maximalstrom ist, und dass es den Energieladezustand beendet, wenn der Induktionsstrom höher als der vorbestimmte Maximalstrom ist;
wobei das Schaltmittel (106) zu Folgendem konfiguriert ist:

Umschalten der Aufwärtswandlerschaltung (300) von einem Spannungsbetriebsmodus in einen Strombetriebsmodus, wenn der Induktionsstrom höher als der vorbestimmte Maximalstrom ist,
Umschalten der Aufwärtswandlerschaltung (300) von dem Strombetriebsmodus in den Spannungsbetriebsmodus, wenn die Ausgangsspannung auf eine minimale Ausgangsspannung ansteigt,

wobei der Spannungsbetriebsmodus so konfiguriert ist, dass er von dem Entladezustand in den Ladezustand umschaltet, wenn die Ausgangsspannung auf die minimale Ausgangsspannung abfällt;
Ausschaltsignal-Erzeugungsmittel (104), das so konfiguriert ist, dass es ein Ausschaltsignal in dem Strombetriebsmodus erzeugt, wobei das Ausschaltsignal-Erzeugungsmittel so konfiguriert ist, dass es eine Dauer $T_{OFF}$ des Energieentladezustands eines nächsten Schaltereignisses bestimmt, wobei die Dauer $T_{OFF}$ konstant ist; und
Einschaltsignal-Erzeugungsmittel (224), das so konfiguriert ist, dass es in dem Spannungsbetriebsmodus ein Einschaltsignal erzeugt, wobei das Einschaltsignal-Erzeugungsmittel so konfiguriert ist, dass es eine Dauer $T_{ON}$ des Energieladezustands eines nächsten Schaltereignisses bestimmt, wobei die Dauer $T_{ON}$ konstant ist.

**2.** Steuerschaltung nach einem des Anspruchs 1, wobei das Ausschaltsignal-Erzeugungsmittel so konfiguriert ist, dass es die Dauer $T_{OFF}$ des Energieentladezustands basierend auf der Eingangsspannung $V_{BAT}$, einer Schaltfrequenz $f_{TARGET}$, bei der der Aufwärtswandler Zyklen ausführt, und der Ausgangsspannung $V_{BST}$ an dem Ausgang des Aufwärtswandlers bestimmt, so dass:

$$T_{OFF} = \frac{V_{BAT}}{f_{TARGET} V_{BST}}$$

3. Steuerschaltung nach einem der vorhergehenden Ansprüche, wobei das Schaltmittel (106) ferner so konfiguriert ist, dass es den Induktor ($L_{BST}$) mit Masse verbindet und den Energieladezustand für die Aufwärtswandlerschaltung (300) startet, wobei der Strom ($I_{COIL}$) durch den Induktor ($L_{BST}$) fließt und der Induktor ($L_{BST}$) durch Erzeugen eines Magnetfeldes während des Energieladungszustands Energie speichert,

wobei der Strom ($I_{COIL}$) in dem Induktor ($L_{BST}$) während des Energieladezustands zunimmt, und wobei das Schaltmittel (106) ferner so konfiguriert ist, dass es als Reaktion darauf, dass der Strom ($I_{COIL}$) an dem Induktor ($L_{BST}$) den vorbestimmten Maximalstrom überschreitet, den Induktor ($L_{BST}$) von der Masse trennt und den Induktor ($L_{BST}$) mit der Ausgangsspannung ($V_{BST}$) verbindet und den Entladezustand für die Aufwärtswandlerschaltung (300) startet, wobei die gespeicherte Energie in dem Induktor ($L_{BST}$) während des Entladezustands auf die Ausgangsspannung ($V_{BST}$) übertragen wird.

4. Steuerschaltung nach Anspruch 3, wobei das Schaltmittel so konfiguriert ist, dass es einen ersten Schalter ($S_L$) und einen zweiten Schalter ($S_H$) des Aufwärtswandlers öffnet und schließt, wobei das Schaltmittel als Reaktion auf das Erzeugen des Ausschaltsignals den ersten ($S_L$) öffnet und den zweiten Schalter ($S_H$) schließt, um durch Trennen des Induktors ($L_{BST}$) von der Masse und Verbinden des Induktors ($L_{BST}$) mit der Ausgangsspannung ($V_{BST}$) in den Entladezustand einzutreten, und wobei das Schaltmittel als Reaktion auf das Erzeugen des Einschaltsignals den ersten ($S_L$) schließt und den zweiten Schalter ($S_H$) öffnet, um durch Verbinden des Induktors ($L_{BST}$) mit der Masse und Trennen des Induktors ($L_{BST}$) von der Ausgangsspannung ($V_{BST}$) in den Ladezustand einzutreten.

5. Steuerschaltung nach Anspruch 4, wobei das Ausschaltsignal-Erzeugungsmittel (104) einen Kondensator (204) und eine Vergleichsschaltung (206) umfasst, wobei der Kondensator so konfiguriert ist, dass er eine Spannung $V_{C,OFF}$ speichert, wobei die Vergleichsschaltung einen ersten Eingang (210) und einen zweiten Eingang (208) umfasst, wobei die Vergleichsschaltung so konfiguriert ist, dass sie eine Referenzspannung $V_{REF,OFF}$ an dem ersten Eingang empfängt, die Spannung $V_{C,OFF}$ an dem zweiten Eingang empfängt und das Ausschaltsignal durch Vergleichen der Referenzspannung $V_{REF,OFF}$ und der Spannung $V_{C,OFF}$ erzeugt.

6. Steuerschaltung nach Anspruch 5, wobei das Einschaltsignal-Erzeugungsmittel (224) einen weiteren Kondensator (234) und eine weitere Vergleichsschaltung (236) umfasst, wobei der weitere Kondensator so konfiguriert ist, dass er eine weitere Spannung $V_{C,ON}$ speichert, wobei die weitere Vergleichsschaltung einen ersten Eingang (240) und einen zweiten Eingang (238) umfasst, wobei die weitere Vergleichsschaltung so konfiguriert ist, dass sie eine weitere Referenzspannung $V_{REF,ON}$ an dem ersten Eingang empfängt, die weitere Spannung $V_{C,ON}$ an dem zweiten Eingang empfängt und das Einschaltsignal durch weiteres Vergleichen der weiteren Referenzspannung $V_{REF,ON}$ und der weiteren Spannung $V_{C,ON}$ erzeugt.

7. Steuerschaltung nach einem der vorhergehenden Ansprüche, wobei der vorbestimmte Maximalstrom

$$I_{BAT,MAX} + \left(1 - \frac{V_{BAT}}{V_{BST}}\right)\frac{V_{BAT}}{2L_{BST}\,f_{BST}}$$ ist, wobei $I_{BAT,MAX}$ ein Maximalstrom für eine an den Eingang der Aufwärtswandlerschaltung angeschlossene Batterie ist, $V_{BST}$ die Ausgangsspannung ist, $V_{BAT}$ die Eingangsspannung ist, $f_{BST}$ die Schaltfrequenz ist und $L_{BST}$ der Induktivitätswert des Induktors ist.

8. Steuerschaltung nach einem der vorhergehenden Ansprüche, wobei das Schaltmittel als Zustandsmaschine implementiert ist.

9. Steuerschaltung nach Anspruch 9, wobei die Zustandsmaschine acht Zustände umfasst und so konfiguriert ist, dass sie einen Übergang von einem der acht Zustände in einen weiteren der acht Zustände ausführt, basierend darauf, ob der Strom an dem Induktor höher als der vorbestimmte Maximalstrom ist.

10. Aufwärtswandlerschaltung (500), die Folgendes umfasst:

die Steuerschaltung nach einem der Ansprüche 1 bis 9; und einen Eingangsanschluss, der zum Empfangen der Eingangsspannung ($V_{BAT}$) konfiguriert ist.

11. Verfahren zum Betreiben einer Steuerschaltung (100) für einen Aufwärtswandler, wobei das Verfahren Folgendes umfasst:

Umschalten des Aufwärtswandlers durch das Schaltmittel (106), um Zyklen auszuführen, wobei jeder Zyklus einen Energieladezustand, in dem ein Induktor die von einer Eingangsspannung ($V_{BAT}$) bereitgestellte Energie speichert, und einen Energieentladezustand umfasst, in dem der Induktor Energie für einen Ausgang des Aufwärtswandlers bereitstellt;

Bestimmen, ob ein Strom an dem Induktor höher als ein vorbestimmter Maximalstrom ist, durch ein Vergleichsmittel (102), das so konfiguriert ist, dass es bestimmen kann und den Energieladezustand beendet, wenn der Induktionsstrom höher als der vorbestimmte Maximalstrom ist;

wobei das Schaltmittel (106) zu Folgendem konfiguriert ist:

Umschalten der Aufwärtswandlerschaltung (300) von einem Spannungsbetriebsmodus in einen Strombetriebsmodus, wenn der Induktionsstrom höher als der vorbestimmte Maximalstrom ist,

Umschalten der Aufwärtswandlerschaltung (300) von dem Strombetriebsmodus in den Spannungsbetriebsmodus, wenn die Ausgangsspannung auf eine minimale Ausgangsspannung ansteigt,

wobei der Spannungsbetriebsmodus so konfiguriert ist, dass er von dem Entladezustand in den Ladezustand umschaltet, wenn die Ausgangsspannung auf die minimale Ausgangsspannung abfällt;

Erzeugen eines Ausschaltsignals in dem Strombetriebsmodus durch ein Ausschaltsignal-Erzeugungsmittel (104), wobei das Ausschaltsignal-Erzeugungsmittel so konfiguriert ist, dass es eine Dauer des Energieentladezustands $T_{OFF}$ eines nächsten Schaltereignisses bestimmt, wobei die Dauer $T_{OFF}$ konstant ist, und

Erzeugen eines Einschaltsignals durch ein Einschaltsignal-Erzeugungsmittel (224) in dem Spannungsbetriebsmodus, wobei das Einschaltsignal-Erzeugungsmittel so konfiguriert ist, dass es eine Dauer $T_{ON}$ des Energieladezustands eines nächsten Schaltereignisses bestimmt, wobei die Dauer $T_{ON}$ konstant ist.

12. Verfahren zum Betreiben der Steuerschaltung (100) nach Anspruch 12, das als Reaktion auf das Erzeugen des Ausschaltsignals ferner das Schließen eines ersten Schalters ($S_L$) durch das Schaltmittel und das Öffnen eines zweiten Schalters ($S_H$) durch das Schaltmittel umfasst.

13. Verfahren zum Betreiben der Steuerschaltung (100) nach Anspruch 11 oder 12, wobei das Ausschaltsignal-Erzeugungsmittel (104) einen Kondensator (204) und eine Vergleichsschaltung (206) umfasst, wobei der Kondensator so konfiguriert ist, dass er eine Spannung ($V_{C,OFF}$) speichert, wobei die Vergleichsschaltung einen ersten Eingang (210) und einen zweiten Eingang (208) umfasst, wobei die Vergleichsschaltung so konfiguriert ist, dass sie eine Referenzspannung ($V_{REF,OFF}$) an dem ersten Eingang empfängt, die Spannung $V_{C,OFF}$ an dem zweiten Eingang empfängt und das Ausschaltsignal durch Vergleichen der Referenzspannung und der Spannung $V_{C,OFF}$ erzeugt.

14. Verfahren zum Betreiben der Steuerschaltung (100) nach Anspruch 13, wobei das Einschaltsignal-Erzeugungsmittel (224) einen weiteren Kondensator (234) und eine weitere Vergleichsschaltung (236) umfasst, wobei der weitere Kondensator so konfiguriert ist, dass er eine weitere Spannung ($V_{C,ON}$) speichert, wobei die weitere Vergleichsschaltung einen ersten Eingang (240) und einen zweiten Eingang (238) umfasst, wobei die weitere Vergleichsschaltung so konfiguriert ist, dass sie eine weitere Referenzspannung ($V_{REF,ON}$) an dem ersten Eingang empfängt, die weitere Spannung $V_{C,ON}$ an dem zweiten Eingang empfängt und durch weiteres Vergleichen der weiteren Referenzspannung und der weiteren Spannung $V_{C,ON}$ das Einschaltsignal erzeugt.

**Revendications**

1. Circuit de commande (100) pour un convertisseur élévateur où le circuit de commande comprend :

des moyens de commutation (106) configurés pour commuter le convertisseur élévateur pour effectuer des cycles où chaque cycle comprend un état de charge d'énergie dans lequel un inducteur stocke l'énergie fournie par une tension d'entrée ($V_{BAT}$) et un état de décharge d'énergie dans lequel l'inducteur fournit de l'énergie à une tension de sortie ($V_{BST}$) du convertisseur élévateur ;

des moyens de comparaison (102) configurés pour déterminer si un courant d'inducteur à l'inducteur est supérieur à un courant maximal prédéterminé et pour mettre fin à l'état de charge d'énergie si le courant d'inducteur est supérieur au courant maximal prédéterminé ;

où les moyens de commutation (106) sont configurés pour :

commuter le circuit de convertisseur élévateur (300) d'un mode de fonctionnement en tension à un mode de fonctionnement en courant lorsque le courant d'inducteur est supérieur au courant maximal prédéterminé,

commuter le circuit de convertisseur élévateur (300) du mode de fonctionnement en courant au mode de fonctionnement en tension lorsque la tension de sortie augmente jusqu'à une tension de sortie minimale,

où le mode de fonctionnement en tension est configuré pour commuter de l'état de décharge à l'état de charge lorsque la tension de sortie chute jusqu'à la tension de sortie minimale ;
des moyens de génération de signal de temps mort (104) configurés pour générer un signal de temps mort dans le mode de fonctionnement en courant, où les moyens de génération de signal de temps mort sont configurés pour déterminer une durée $T_{OFF}$ de l'état de décharge d'énergie d'un prochain événement de commutation, où la durée $T_{OFF}$ est constante ; et
des moyens de génération de signal de temps de marche (224) configurés pour générer un signal de temps de marche dans le mode de fonctionnement en tension, où les moyens de génération de signal de temps de marche sont configurés pour déterminer une durée $T_{ON}$ de l'état de charge d'énergie d'un prochain événement de commutation, où la durée $T_{ON}$ est constante.

2. Circuit de commande selon l'une quelconque de la revendication 1, où les moyens de génération de signal de temps mort sont configurés pour déterminer la durée $T_{OFF}$ de l'état de décharge d'énergie en fonction de la tension d'entrée $V_{BAT}$, d'une fréquence de commutation $f_{TARGET}$ à laquelle le convertisseur élévateur effectue des cycles et de la tension de sortie $V_{BST}$ à la sortie du convertisseur élévateur, de telle sorte que :

$$T_{OFF} = \frac{V_{BAT}}{f_{TARGET} V_{BST}}$$

3. Circuit de commande selon l'une quelconque des revendications précédentes, où les moyens de commutation (106) sont en outre configurés pour connecter l'inducteur ($L_{BST}$) à la masse et démarrer l'état de charge d'énergie pour le circuit de convertisseur élévateur (300), où le courant ($I_{COIL}$) circule à travers l'inducteur ($L_{BST}$) et l'inducteur ($L_{BST}$) stocke de l'énergie en générant un champ magnétique pendant l'état de charge d'énergie,

où le courant ($I_{COIL}$) dans l'inducteur ($L_{BST}$) augmente pendant l'état de charge d'énergie, et
où les moyens de commutation (106) sont en outre configurés pour déconnecter l'inducteur ($L_{BST}$) de la masse et connecter l'inducteur ($L_{BST}$) à la tension de sortie ($V_{BST}$) en réponse au courant ($I_{COIL}$) dans l'inducteur ($L_{BST}$) qui dépasse le courant maximal prédéterminé et commence l'état de décharge pour le circuit de convertisseur élévateur (300), où l'énergie stockée dans l'inducteur ($L_{BST}$) est transférée à la tension de sortie ($V_{BST}$) pendant l'état de décharge.

4. Circuit de commande selon la revendication 3, où les moyens de commutation sont configurés pour ouvrir et fermer un premier commutateur ($S_L$) et un deuxième commutateur ($S_H$) du convertisseur élévateur, où les moyens de commutation ouvrent le premier commutateur ($S_L$) et ferment le deuxième commutateur ($S_H$) en réponse à la génération du signal de temps mort pour entrer dans l'état de décharge en déconnectant l'inducteur ($L_{BST}$) de la masse et en connectant l'inducteur ($L_{BST}$) à la tension de sortie ($V_{BST}$), et où les moyens de commutation ferment le premier commutateur ($S_L$) et ouvrent le deuxième commutateur ($S_H$) en réponse à la génération du signal de temps de marche pour entrer dans l'état de charge en connectant l'inducteur ($L_{BST}$) à la masse et en déconnectant l'inducteur ($L_{BST}$) de la tension de sortie ($V_{BST}$).

5. Circuit de commande selon la revendication 4, où les moyens de génération de signal de temps mort (104) comprennent un condensateur (204) et un circuit de comparaison (206) où le condensateur est configuré pour stocker une tension $V_{C,OFF}$, où le circuit de comparaison comprend une première entrée (210), une deuxième entrée (208), où le circuit de comparaison est configuré pour recevoir une tension de référence $V_{REF,OFF}$ à la première entrée, pour recevoir la tension $V_{C,OFF}$ à la deuxième entrée, et pour générer le signal de temps mort en comparant la tension de référence $V_{REF,OFF}$ et la tension $V_{C,OFF}$.

6. Circuit de commande selon la revendication 5, où les moyens de génération de signal de temps de marche (224) comprennent un autre condensateur (234) et un autre circuit de comparaison (236) où l'autre condensateur est configuré pour stocker une autre tension $V_{C,ON}$, où l'autre circuit de comparaison comprend une première entrée (240), une deuxième entrée (238), où l'autre circuit de comparaison est configuré pour recevoir une autre tension de référence $V_{REF,ON}$ à la première entrée, pour recevoir l'autre tension $V_{C,ON}$ à la deuxième entrée, et pour générer le signal de temps de marche en comparant en outre l'autre tension de référence $V_{REF,ON}$ et l'autre tension $V_{C,ON}$.

**7.** Circuit de commande selon l'une quelconque des revendications précédentes, où le courant maximal prédéterminé est $I_{BAT,MAX} + \left(1 - \frac{V_{BAT}}{V_{BST}}\right)\frac{V_{BAT}}{2 L_{BST}\, f_{BST}}$ ; où $I_{BAT,MAX}$ est un courant maximal pour une batterie connectée à l'entrée du circuit convertisseur élévateur, $V_{BST}$ est la tension de sortie, $V_{BAT}$ est la tension d'entrée, $f_{BST}$ est la fréquence de commutation et $L_{BST}$ est la valeur d'inductance de l'inducteur.

**8.** Circuit de commande selon l'une quelconque des revendications précédentes, où les moyens de commutation sont mis en œuvre sous forme d'une machine d'états.

**9.** Circuit de commande selon la revendication 9, où la machine d'états comprend huit états et est configurée pour effectuer une transition de l'un des huit états à un autre des huit états selon que le courant dans l'inducteur est supérieur ou non au courant maximal prédéterminé.

**10.** Circuit convertisseur élévateur (500) comprenant :

le circuit de commande selon l'une quelconque des revendications 1 à 9 ; et
une borne d'entrée configurée pour recevoir la tension d'entrée ($V_{BAT}$).

**11.** Procédé de fonctionnement d'un circuit de commande (100) pour un convertisseur élévateur, où le procédé comprend :

commuter, par des moyens de commutation (106), le convertisseur élévateur pour effectuer des cycles où chaque cycle comprend un état de charge d'énergie dans lequel un inducteur stocke l'énergie fournie par une tension d'entrée ($V_{BAT}$) et un état de décharge d'énergie dans lequel l'inducteur fournit de l'énergie à une sortie du convertisseur élévateur ;
déterminer, par des moyens de comparaison (102) configurés pour déterminer si un courant à l'inducteur est supérieur à un courant maximal prédéterminé et pour mettre fin à l'état de charge d'énergie si le courant d'inducteur est supérieur au courant maximal prédéterminé ;
où les moyens de commutation (106) sont configurés pour :

commuter le circuit de convertisseur élévateur (300) d'un mode de fonctionnement en tension à un mode de fonctionnement en courant lorsque le courant d'inducteur est supérieur au courant maximal prédéterminé,
commuter le circuit de convertisseur élévateur (300) du mode de fonctionnement en courant au mode de fonctionnement en tension lorsque la tension de sortie augmente jusqu'à une tension de sortie minimale,

où le mode de fonctionnement en tension est configuré pour commuter de l'état de décharge à l'état de charge lorsque la tension de sortie chute jusqu'à la tension de sortie minimale ;
générer, par des moyens de génération de signal de temps mort (104), un signal de temps mort dans le mode de fonctionnement en courant, où les moyens de génération de signal de temps mort sont configurés pour déterminer une durée de l'état de décharge d'énergie $T_{OFF}$ d'un prochain événement de commutation, où la durée $T_{OFF}$ est constante ; et
générer, par des moyens de génération de signal de temps de marche (224), un signal de temps de marche dans le mode de fonctionnement en tension, où les moyens de génération de signal de temps de marche sont configurés pour déterminer une durée $T_{ON}$ de l'état de charge d'énergie d'un prochain événement de commutation, où la durée $T_{ON}$ est constante.

**12.** Procédé de fonctionnement du circuit de commande (100) selon la revendication 12, comprenant la fermeture, par les moyens de commutation, d'un premier commutateur ($S_L$) et l'ouverture, par les moyens de commutation, d'un deuxième commutateur ($S_H$), en réponse à la génération du signal de temps mort.

**13.** Procédé de fonctionnement du circuit de commande (100) selon la revendication 11 ou 12, où les moyens de génération du signal de temps mort (104) comprennent un condensateur (204) et un circuit de comparaison (206) où le condensateur est configuré pour stocker une tension ($V_{C,OFF}$), où le circuit de comparaison comprend une première entrée (210), une deuxième entrée (208), où le circuit de comparaison est configuré pour recevoir une tension de référence ($V_{REF,OFF}$) à la première entrée, pour recevoir la tension $V_{C,OFF}$ à la deuxième entrée, et pour générer le signal de temps mort en comparant la tension de référence et la tension $V_{C,OFF}$.

**14.** Procédé de fonctionnement du circuit de commande (100) selon la revendication 13, où les moyens de génération du signal de temps de marche (224) comprennent un autre condensateur (234) et un autre circuit de comparaison (236) où l'autre condensateur est configuré pour stocker une autre tension ($V_{C,ON}$), où l'autre circuit de comparaison comprend une première entrée (240), une deuxième entrée (238), où l'autre circuit de comparaison est configuré pour recevoir une autre tension de référence ($V_{REF,ON}$) à la première entrée, pour recevoir l'autre tension $V_{C,ON}$ à la deuxième entrée, et pour générer le signal de temps de marche en comparant en outre l'autre tension de référence et l'autre tension $V_{C,ON}$.

# Fig. 1A

EP 4 213 354 B1

Fig. 1B

$I_{MAX}$

$I_{COIL}$

0

$T_{ON}$  $T_{OFF}$  $T_{ON}$  $T_{ON}$

time →

Fig. 1C

pwm

time →

Fig. 1D

ready

time →

Fig. 1E

uv

time →

EP 4 213 354 B1

# Fig. 1F

EP 4 213 354 B1

Fig. 1G

Fig. 1H

Fig. 1I

Fig. 1J

EP 4 213 354 B1

Fig. 1K

EP 4 213 354 B1

Fig. 1L

Fig. 1M $_{pwm}$

Fig. 1N $_{oc}$

Fig. 1O $_{ready}$

Fig. 1P $_{uv}$

# Fig. 1Q

$V_{BST}$ ↑

time →

# Fig. 1R

$V_{BAT}$ ↑

time →

# Fig. 1S

$I_{MAX}$ - - - - - - - - - - - - - - - - - - - - - - - - - - - - - - - - -

$I_{COIL}$

**$I_{BAT}$**

$I_{BAT}$

time →

EP 4 213 354 B1

## Fig. 1T

$V_{BST}$

time ——▶

## Fig. 1U

$V_{BAT}$

time ——▶

## Fig. 1V

$I_{MAX}$

$I_{COIL}$

**I$_{BAT}$**

$I_{BAT}$

time ——▶

Fig. 2A

Fig. 2B

EP 4 213 354 B1

# Fig. 3

EP 4 213 354 B1

Fig. 4A

$I_{MAX}$

$I_{COIL}$

400  402  404

$T_{OFF}$  $T_{OFF}$  $T_{OFF}$

0

time→

Fig. 4B  pwm

time→

Fig. 4C  oc

time→

Fig. 4D  ready_toff

time→

Fig. 4E  uv

time→

EP 4 213 354 B1

EP 4 213 354 B1

# Fig. 5

## Fig. 6A

$v_{BST}$

## Fig. 6B

$v_{BAT}$

## Fig. 6C

$I_{BAT}$

$I_{COIL}$

EP 4 213 354 B1

Fig. 7A

Fig. 7B

$V_{REF,ON}$

$V_{C,ON}$

$V_{REF,ON}$
$V_{C,ON}$

Fig. 7C

$V_{REF,OFF}$

$V_{C,OFF}$

$V_{REF,OFF}$
$V_{C,OFF}$

Fig. 7D

Fig. 8A

# Fig. 8B

$V_{REF,ON}$

$V_{C,ON}$

$V_{REF,ON}$
$V_{C,ON}$

# Fig. 8C

$V_{REF,OFF}$

$V_{C,OFF}$

$V_{REF,OFF}$
$V_{C,OFF}$

Fig. 8D

## Fig. 9A

## Fig. 9B

EP 4 213 354 B1

## Fig. 9C

## Fig. 9D

EP 4 213 354 B1

# Fig. 9E

# Fig. 9F

# Fig. 9G

# Fig. 9H

# Fig. 10

# Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10476387 B

- US 2021359605 A

**Non-patent literature cited in the description**

- **M. BERKHOUT**. Integrated overcurrent protection system for class-D audio power amplifiers. *IEEE Journal of Solid-State Circuits*, November 2005, vol. 40
- **GASPARRI, OSVALDO et al.** DC-DC Buck Converter Driver with Variable Off-Time Peak Current 1 \lode Control. *Advances in Science, Technology and Engineering Systems Journal Volume*, January 2020, vol. 5 (5)
- **CHENG LIN ET**. On-Chip Compensated Wide Output Range Boost Converter with Fixed-Frequency Adaptive Off-Time Control for LED Driver Applications. *IEEE TRANSACTIONS ON POWER ELECTRONICS, INSTITUTE OF ELECTRICAL AND ELECTRONICS ENGINEERS*, 01 April 2015, vol. 30 (4), ISSN 0885-9993, 2096-2107

- *100 mA, Fixed Frequency PWM Step-Up Micropower Switching Regulator*, 01 March 2006, 1-17
- **VAN DEN BOSSCHE et al.** A simplified controller and detailed dynamics of constant off-time peak current control. *Journal of Electrical Engineering*, 01 September 2017, vol. 68 (5), ISSN 1339-309X, 390-395
- Monolithic DC-DC boost converter with current-mode hysteretic control. **AYAZ HASAN et al.** ELECTRICAL AND COMPUTER ENGINEERING (CCECE), 2011 24TH CANADIAN CONFERENCE ON. IEEE, 08 May 2011, 1242-1245